# EUROPEAN PATENT APPLICATION

(11) **EP 4 643 745 A1**
(43) Date of publication of application: **05.11.2025**
(21) Application number: 23910128.0
(22) Date of filing: 13.12.2023
(51) Int. Cl.: A47L 11/24, B25J 18/02, B25J 17/02, B25J 9/10

(54) **SELF-MOVING CLEANING DEVICE**

(30) Priority: 30.12.2022 CN 202211729733
(71) Applicant: Beijing Roborock Technology Co., Ltd., Beijing 102206 (CN)
(72) Inventor: LI, Xing, Beijing 102206 (CN); LI, Changcheng, Beijing 102206 (CN); YU, Qiang, Beijing 102206 (CN); ZOU, Lvwu, Beijing 102206 (CN); YANG, Cheng, Beijing 102206 (CN); CHENG, Pan, Beijing 102206 (CN)
(74) Representative: Cabinet Beau de Loménie
(86) International application number: PCT/CN2023/138330
(87) International publication number: WO 2024/140198

(57) **Abstract**

A self-moving cleaning device (002), comprising: a device body (010), the device body (010) comprising an accommodating cavity (011), and two driving wheels (020) and a driven wheel (030) which are arranged at the bottom of the accommodating cavity (011) and distributed in the shape of a triangle; and a mechanical arm (001), the mechanical arm (001) being foldable and accommodated in the accommodating cavity (011), the mechanical arm (001) comprising a rotating seat (55), and the projection of the rotating seat (55) in the horizontal plane being located inside the projection of the triangle in the horizontal plane.

## Description

The present application claims priority to the Chinese patent application No. 202211729733.X, filed with the Chinese Patent Office on December 30, 2022 and entitled "SELF-MOVING CLEANING DEVICE", which is incorporated herein by reference in its entirety.

### TECHNICAL FIELD

The present application relates to the technical field of smart homes, and in particular to a self-moving cleaning device.

### BACKGROUND ART

With the rapid advancement of science and technology and the steady improvement in people's living standards, self-moving cleaning devices, such as intelligent sweeping robots, have progressively entered our daily lives. In order to better achieve a sweeping function, the current self-moving cleaning device is additionally provided with a mechanical arm to implement the grasping or movement of obstacles, articles or garbage.

### SUMMARY OF THE APPLICATION

### (I) Object of the present application

An object of the present application is to provide a self-moving cleaning device.

### (II) Technical solutions

A first aspect of the present application provides a self-moving cleaning device, including: a device main body and a mechanical arm, wherein the device main body includes a holding chamber, and two driving wheels and a driven wheel are distributed at the bottom of the device main body in the shape of a triangle; and the mechanical arm is foldably held in the holding chamber and includes a rotatable base, and a projection of the rotatable base in a horizontal plane is located within a projection of the triangle in the horizontal plane.

### (III) Technical effects

The above technical solutions of the present application have the following technical effects.

**In** the technical solutions of the present application, by enabling the mechanical arm to be foldably held in the holding chamber, the folded mechanical arm can be stored in the holding chamber. The mechanical arm in a folded state occupies less space, has smaller dimensions, and facilitates storage. Meanwhile, since the holding chamber is arranged on the device main body, the storage of the mechanical arm can be achieved by making full use of the structure of the device main body, thereby achieving a simple structure and being able to meet design requirements of the self-moving cleaning device for a compact structure and smaller dimensions. The two driving wheels and one driven wheel of the driving system are distributed at the bottom of the device main body in the shape of a triangle. Such an arrangement enables the device main body to move and enables the device main body to have good stability during the movement. The projection of the rotatable base of the mechanical arm in the horizontal plane is located within the projection of the triangle in the horizontal plane. This indicates that the center of gravity of the mechanical arm on the device main body lies within a triangular region formed by the two driving wheels and the driven wheel. Such an arrangement enables the self-moving cleaning device to achieve a better center of gravity, that is, the center of gravity of the self-moving cleaning device can coincide with or remain close to a support center formed by the two driving wheels and the driven wheel, thereby ensuring the stability and reliability of the self-moving cleaning device during working and being able to avoid the situation that the mounting of the mechanical arm outside the triangular region may likely lead to overturn of the device main body.

### BRIEF DESCRIPTION OF THE DRAWINGS

Various other advantages and benefits will become clear to those skilled in the art by reading the detailed description of the preferred embodiments below. The accompanying drawings are only for the purpose of illustrating the preferred embodiments, and are not considered as limiting the present application. Moreover, identical parts are denoted by identical reference numerals throughout the accompanying drawings. In the accompanying drawings:
FIG. 1 shows a schematic structural diagram of a mechanical arm of a self-moving cleaning device in an unfolded state provided by an embodiment of the present application;
FIG. 2 shows a schematic structural diagram of the mechanical arm of the self-moving cleaning device in a folded state provided by an embodiment of the present application;
FIG. 3 shows a schematic structural diagram of the self-moving cleaning device provided by an embodiment of the present application from another perspective;
FIG. 4 shows a schematic structural diagram of the mechanical arm in the unfolded state provided by an embodiment of the present application from one perspective;
FIG. 5 shows a schematic structural diagram of the mechanical arm in the unfolded state provided by an embodiment of the present application from another perspective;
FIG. 6 shows a schematic structural diagram of the mechanical arm in the folded state provided by an embodiment of the present application from one perspective;
FIG. 7 shows a schematic structural diagram of the mechanical arm in the folded state provided by an embodiment of the present application from another perspective;
FIG. 8 shows a simplified diagram of a mechanism structure of the mechanical arm in the unfolded state provided by an embodiment of the present application;
FIG. 9 shows a schematic structural diagram of the mechanical arm in the folded state provided by an embodiment of the present application from yet another perspective;
FIG. 10 shows a schematic structural diagram of the embodiment shown in FIG. 9 from one perspective;
FIG. 11 shows a sectional view of the embodiment shown in FIG. 10 taken along A-A;
FIG. 12 shows a sectional view when a first mechanical joint is assembled with a base and a rotatable base provided by an embodiment of the present application;
FIG. 13 shows a schematic structural diagram when a second mechanical joint is assembled with the rotatable base and a support arm provided by an embodiment of the present application;
FIG. 14 shows a partial schematic structural diagram of the second mechanical joint provided by an embodiment of the present application from one perspective;
FIG. 15 shows a sectional view of the embodiment shown in FIG. 14 taken along B-B;
FIG. 16 shows a schematic structural diagram of the mechanical arm in the unfolded state provided by an embodiment of the present application from yet another perspective;
FIG. 17 shows a sectional view of the embodiment shown in FIG. 16 taken along C-C;
FIG. 18 shows a locally enlarged schematic diagram of Part A in the embodiment shown in FIG. 17;
FIG. 19 shows a sectional view of a third mechanical joint provided by an embodiment of the present application;
FIG. 20 shows a schematic structural diagram of the third mechanical joint provided by an embodiment of the present application from one perspective;
FIG. 21 shows a sectional view when the third mechanical joint is assembled with the support arm and a connecting arm provided by an embodiment of the present application;
FIG. 22 shows a partial schematic structural diagram when the third mechanical joint is assembled with the support arm and the connecting arm provided by an embodiment of the present application;
FIG. 23 shows a schematic structural diagram when a fourth mechanical joint is assembled with a working arm and a mechanical hand provided by an embodiment of the present application from one perspective;
FIG. 24 shows a partial sectional view of the embodiment shown in FIG. 23 taken along D-D from one perspective;
FIG. 25 shows a schematic structural diagram of the mechanical arm in the unfolded state provided by an embodiment of the present application from still yet another perspective;
FIG. 26 shows a locally enlarged schematic diagram of Part B in the embodiment shown in FIG. 25;
FIG. 27 shows a schematic structural diagram of the mechanical hand provided by an embodiment of the present application from one perspective;
FIG. 28 shows a schematic structural diagram of the mechanical hand provided by an embodiment of the present application from another perspective;
FIG. 29 shows a schematic structural diagram of the mechanical hand provided by an embodiment of the present application from yet another perspective;
FIG. 30 shows a schematic structural diagram of the mechanical hand provided by an embodiment of the present application from still yet another perspective;
FIG. 31 shows a locally enlarged schematic diagram of the embodiment shown in FIG. 29 from one perspective;
FIG. 32 shows a locally enlarged schematic diagram of the embodiment shown in FIG. 29 from another perspective;
FIG. 33 shows a locally enlarged schematic diagram of the embodiment shown in FIG. 30 from another perspective;
FIG. 34 shows a schematic exploded view of the embodiment shown in FIG. 33;
FIG. 35 shows a schematic block diagram of a self-moving cleaning device provided by an embodiment of the present application;
FIG. 36 shows a schematic structural diagram of a mechanical hand provided by another embodiment of the present application from one perspective;
FIG. 37 shows a partial schematic structural diagram of the embodiment shown in FIG. 36;
FIG. 38 shows a schematic structural diagram of the mechanical hand provided by another embodiment of the present application from another perspective;
FIG. 39 shows a schematic structural diagram of the mechanical hand provided by another embodiment of the present application from yet another perspective;
FIG. 40 shows a schematic structural diagram of the mechanical hand provided by another embodiment of the present application from still yet another perspective;
FIG. 41 shows a schematic structural diagram of the mechanical hand provided by another embodiment of the present application from still yet another perspective; and
FIG. 42 shows a partial schematic structural diagram of the embodiment shown in FIG. 41.

Description of the reference signs:
001-mechanical arm;
10-first mechanical joint, 110-first driving part, 120-rotatable joint, 121-rolling assembly, 1211-first rolling assembly, 1212-second rolling assembly, 122-first spacer, 123-pre-tightening assembly, 1231-first adjusting member, 1232-first pre-tightening spacer, 124-sliding sleeve, 130-first synchronizing pulley assembly, 131-first transmission belt, 132-first synchronizing wheel, 133-second synchronizing wheel, 140-first rotation angle detecting apparatus, 141-magnetic induction member, 142-magnetic member, 150-second synchronizing pulley assembly, 151-second synchronizing belt, 160-tensioning apparatus, 161-guiding part, 162-tensioning bearing, 163-adjusting hole, 170-detecting shaft, and 180-fixing frame;
20-second mechanical joint, 210-first guiding nut, 220-second driving part, 230-first screw rod, 231-stepped structure, 232-anti-pulling groove, 240-motor seat, 250-thrust bearing, 260-elastic member, 280-anti-pulling member, 290-limit switch, 291-switch main body, and 292-trigger;
30-third mechanical joint, 310-motor, 311-first output shaft, 312-motor base plate, 313-stator, 314-rotor, 315-motor housing, 316-Hall plate, 317-motor mounting chamber, 320-planetary speed-reducing mechanism, 321-primary gear set, 3211-first sun gear, 3212-first planetary gear, 3213-first planetary rack, 322-secondary gear set, 3221-second sun gear, 3222-second planetary gear, 3223-second planetary rack, 324-speed-reducing mounting chamber, 325-inner gear ring, 326-output end cover, 3261-limit structure, 327-second output shaft, 3271-connecting hole, 3272-first limit surface, 330-first bearing, 340-flange bearing, 350-first connecting member, 351-head part, 352-stem part, 360-second pre-tightening spacer, 370-hoop, and 380-second connecting member;
40-fourth mechanical joint, 410-fourth driving part, 411-fourth housing, 412-fourth output shaft, 420-photoelectric sensor, 430-baffle, and 440-bearing apparatus;
50-base; 55-rotatable base, 551-surface, and 552-first rotatable shaft;
60-support arm, 620-first connecting part, and 630-second connecting part;
70-connecting arm, 710-first bent part, and 720-second bent part;
80-working arm, 810-mounting hole, and 820-mounting groove;
90-mechanical hand, 910-fifth driving part, 920-second screw rod, 921-thrust spacer, 930-second guiding nut, 931-cylindrical boss, 940-clamping part, 941-avoidance space, 950-connecting rod mechanism, 951-first rod, 9511-sliding slot, 9512-first hinge point, 9513-second hinge point, 952-second rod, 9521-third hinge point, 9522-fourth hinge point, 953-bent structure, 960-base seat, 961-first cover plate, 962-second cover plate, 970-sixth driving part, 980-transmission mechanism, 981-connecting rod, 982-second rotatable shaft, 983-second screw rod, 984-second guiding nut, 985-connecting block, 986-slider, 990-first imaging apparatus, 991-imaging bracket, 992-camera, 901-connecting shaft, and 911-limit hole;
90'-mechanical hand, 910'-main driving part, 912'-auxiliary gear set, 920'-second screw rod, 930'-second guiding nut, 931'-cylindrical boss, 940'-clamping part, 951'-first rod, 9511'-first hinge point, 9512'-second hinge point, 952'-second rod, 9521'-third hinge point, 9522'-fourth hinge point, 9523'-sliding slot, 953'-first connecting rod mechanism, 954'-second connecting rod mechanism, 955'-main gear set, 960'-base seat, 961'-first cover plate, 962'-second cover plate, 963'-holding groove, 970'-auxiliary driving part, 980'-elastic resetting member, 990'-first imaging apparatus, 991'-imaging bracket, 992'-camera, 993'-avoidance bend, and 901'-connecting shaft; and
002-self-moving cleaning device, 010-device main body, 011-holding chamber, 020-driving wheel, 030-driven wheel, 040-cleaning system, 050-second imaging apparatus, 060-control system, and 070-processing system.

### DETAILED DESCRIPTION

To better understand the above technical solutions, the technical solutions of the embodiments of the present application will be described in detail below with reference to the accompanying drawings and specific embodiments. It should be understood that the embodiments of the present application and the specific features in the embodiments are detailed descriptions of the technical solutions of the present application, not limitations on the technical solutions of the present application. In case of no conflict, the embodiments of the present application and the technical features in the embodiments may be combined with each other.

In order to make the objects, technical solutions and advantages of the present application clearer, the following describes the present application in further detail in conjunction with specific embodiments and with reference to the accompanying drawings. It should be understood that these descriptions are exemplary only and are not intended to limit the scope of the present application. Also, in the following description, the descriptions on well-known structures and techniques are omitted to avoid unnecessarily obscuring the concepts of the present application.

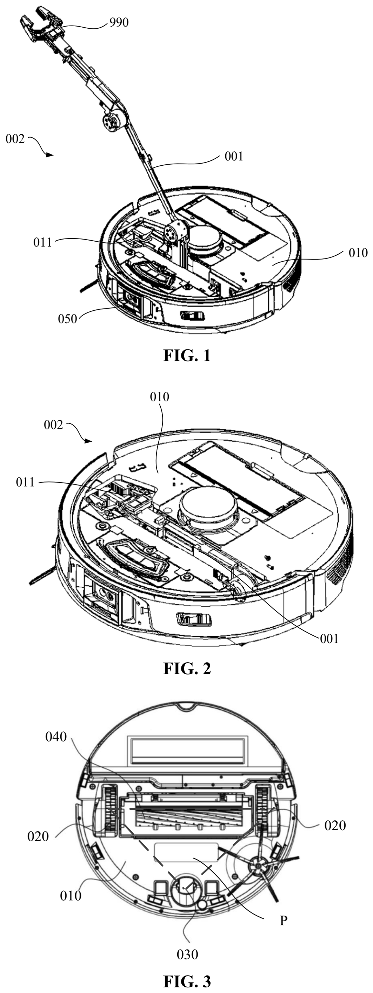

As shown in FIGs. 1 to 35, embodiments of the present application provide a self-moving cleaning device 002. The self-moving cleaning device 002 may be a sweeping robot, a sweeping and mopping integrated machine, or other self-moving cleaning device that meets the requirements.

Specifically, the self-moving cleaning device 002 includes, but is not limited to: a device main body 010, a cleaning system 040, a driving system, a perception system, a control system 060, an energy system and a human-computer interaction system, etc. The respective systems above coordinate with each other, such that the self-moving cleaning device 002 can move autonomously to achieve a cleaning function. In the cleaning device, functional elements and the like that constitute the above-mentioned systems are integrated in the device main body 010.

As shown in FIGs. 1, 2 and 3, the self-moving cleaning device 002 provided in the embodiment of the present application includes: a device main body 010 and a mechanical arm 001. The device main body 010 includes a holding chamber 011. Two driving wheels 020 and a driven wheel 030 are distributed at the bottom of the device main body 010 in the shape of a triangle. The mechanical arm 001 is foldably held in the holding chamber 011. The mechanical arm 001 includes a rotatable base 55. A projection of the rotatable base 55 in a horizontal plane is located within a projection of the triangle in the horizontal plane.

In the present embodiment, the mechanical arm 001 is connected to the holding chamber 011 of the device main body 010 through a mounting structure arranged within the holding chamber 011, that is, the mechanical arm 001 is mounted in the holding chamber 011 of the device main body 010 through the mounting structure, such that the mechanical arm 001 can move along with the movement of the device main body 010, thereby reaching a target working position along with the device main body 010. By enabling the mechanical arm 001 to be foldably held in the holding chamber 011, the folded mechanical arm 001 is stored in the holding chamber 011. The mechanical arm 001 in a folded state occupies less space, has smaller dimensions, and facilitates storage. Meanwhile, since the holding chamber 011 is arranged on the device main body 010, the storage of the mechanical arm 001 can be achieved by making full use of the structure of the device main body 010, achieving a simple structure and being able to meet design requirements of the self-moving cleaning device 002 for a compact structure and smaller dimensions.

The driving system includes the two driving wheels 020 and one driven wheel 030. The two driving wheels 020 and the one driven wheel 030 are distributed at the bottom of the device main body 010 in the shape of a triangle, wherein a triangular region refers to a triangular region where P is located as shown in FIG. 3. Such an arrangement can achieve the movement of the device main body 010 and enable the device main body 010 to have good stability during the movement. The mechanical arm 001 includes a rotatable base 55. A projection of the rotatable base 55 in a horizontal plane is located within a projection of the triangle in the horizontal plane. This indicates that the center of gravity of the mechanical arm 001 on the device main body 010 lies within the triangular region formed by the two driving wheels 020 and the driven wheel 030. Such an arrangement enables the self-moving cleaning device 002 to achieve a better center of gravity, that is, the center of gravity of the self-moving cleaning device 002 can coincide with or remain close to a support center formed by the two driving wheels 020 and the one driven wheel 030, thereby ensuring the stability and reliability of the self-moving cleaning device 002 during working and being able to avoid the situation that the mounting of the mechanical arm 001 outside the triangular region easily leads to overturn of the device main body 010.

As shown in FIG. 3, in some possible embodiments provided by the present application, the two driving wheels 020 are distributed along a transverse direction of the device main body 010, and the mechanical arm 001 is arranged close to the two driving wheels 020. Thus, in the case of ensuring that the self-moving cleaning device 002 has better stability and reliability, the horizontal size of the mechanical arm 001 can be increased as much as possible to enhance the strength of the mechanical arm 001.

Generally, the two driving wheels 020 are distributed along the transverse direction of the device main body 010 and located at positions near the middle of the device main body 010. Thus, the driven wheel 030 is distributed at the front end of the bottom of the device main body 010. That is, a distance between the two driving wheels 020 is greater than a distance between the driven wheel 030 and each driving wheel 020. Therefore, by arranging the holding chamber 011 close to the two driving wheels 020 and arranging the mechanical arm 001 close to the two driving wheels 020, the horizontal size (e.g., length) of the mechanical arm 001 can be larger. This increases a connection area between the mechanical arm 001 and the holding chamber 011, thereby enabling stable and reliable connection of the mechanical arm 001 to the holding chamber 011 of the device main body 010. In this way, when the mechanical arm 001 is unfolded for working, the rolling risk of the device main body 010 due to a larger unfolding range of the mechanical arm 001 can be reduced, such that the stability and safety of the self-moving cleaning device 002 during working can be enhanced, thereby improving the user satisfaction in use.

As shown in FIG. 2, in some possible embodiments provided by the present application, when the mechanical arm 001 is foldably held in the holding chamber 011, an end of the mechanical arm 001 away from the driving wheels 020 and/or the driven wheel 030 is not higher than an upper surface of the device main body 010.

In other words, the mechanical arm 001, when foldably held into the holding chamber 011, does not protrude from the upper surface of the device main body 010. That is, the mechanical arm 001 in this posture will not increase the height of the device main body 010. Therefore, this can avoid a problem of limitations on the movement range of the self-moving cleaning device 002 caused by a fact that a protruding part of the mechanical arm 001 formed by the mechanical arm 001 protruding from the upper surface of the device main body 010 collides with an obstacle. That is, the folded mechanical arm 001 accommodated in the holding chamber 011 does not affect the original movement range of the self-moving cleaning device 002. Thus, in the self-moving cleaning device 002 provided by the embodiment of the present application, the original functions of the self-moving cleaning device 002 remain unaffected under the condition that the mechanical arm 001 is additionally provided to expand the function of the self-moving cleaning device 002.

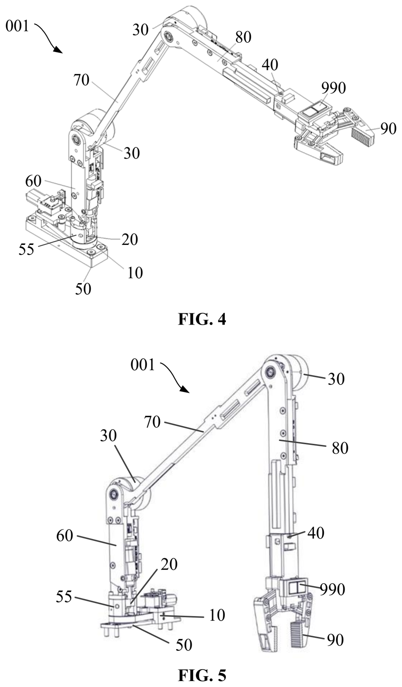

As shown in FIGs. 4, 5, 6 and 8, in some possible embodiments provided by the present application, the mechanical arm 001 includes: a base 50, a rotatable base 55, a support arm 60, a connecting arm 70, a working arm 80 and a mechanical hand 90. The base 50 is connected within the holding chamber 011. That is, the entire mechanical arm 001 is mounted in the holding chamber 011 through the base 50 and a mounting structure arranged within the holding chamber 011, so as to be fixed to the device main body 010. Specifically, the mounting structure may be a mounting base, a mounting hole, a clamping slot, or other structures. That is, the base 50 may be fixed in the holding chamber 011 through a screw, a clamping slot and clamping latch unit, or other structures that meet the requirements.

Further, the rotatable base 55 is connected to the base 50 through a first mechanical joint 10, such that the rotatable base 55 can rotate relative to the base 50. The support arm 60 is connected to the rotatable base 55 through a second mechanical joint 20, such that the support arm 60 can be folded or unfolded relative to the rotatable base 55, e.g., the support arm 60 can be raised or lowered relative to the rotatable base 55. A first end of the connecting arm 70 is connected to the support arm 60 through a third mechanical joint 30, such that the connecting arm 70 can be folded or unfolded relative to the support arm 60, e.g., the connecting arm 70 can be raised or lowered relative to the support arm 60. A second end of the connecting arm 70 is connected to the working arm 80 through the other third mechanical joint 30, such that the working arm 80 can be folded or unfolded relative to the connecting arm 70, e.g., the working arm 80 can be raised or lowered relative to the connecting arm 70. The working arm 80 is connected to the mechanical hand 90 through a fourth mechanical joint 40, such that the mechanical hand 90 can rotate relative to the working arm 80.

In other words, the mechanical arm 001 provided in the embodiments of the present application adopts a five-degree-of-freedom, three-arm-segment foldable design. Thus, the motion range of the mechanical arm 001 can be increased, thereby increasing the cleaning range of the self-moving cleaning device 002 and expanding the operational range of the product. Meanwhile, the foldable design of the mechanical arm 001 enables the mechanical arm 001 to be high in space efficiency. That is, the folded mechanical arm 001 is smaller in dimensions, facilitating storage.

Here, the first mechanical joint 10 can be understood as a waist rotating joint, the second mechanical joint 20 as a waist raising-lowering joint, the two third mechanical joints 30 as a shoulder joint and an elbow joint respectively which can be raised and lowered, and the fourth mechanical joint 40 as a rotatable wrist joint.

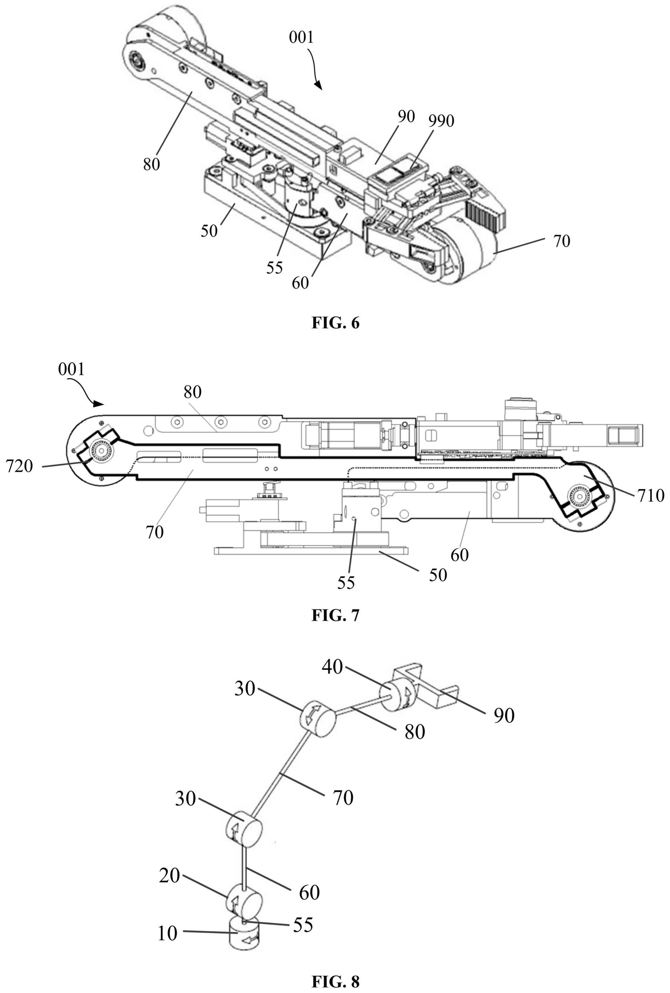

In the above embodiment, as shown in FIGs. 6 and 7, since the bent structures are provided at both ends of the connecting arm 007 respectively, when the connecting arm 70 is in a folded state relative to both the support arm 60 and the working arm 80, the two bent structures are engaged in a convex-concave shape fit with the support arm 60 and the working arm 80, respectively.

Thus, when the support arm 60, the connecting arm 70 and the working arm 80 are all in the folded state, with the bent structures, a part of the connecting arm 70 can be engaged into the support arm 60 and a part of the connecting arm 70 can be engaged into the working arm 80, such that the connecting arm 70 can be compactly designed with the support arm 60 and the working arm 80. Meanwhile, since the two bent structures are engaged in a convex-concave shape fit with the support arm 60 and the working arm 80, respectively, the design of engagement in a convex-concave shape fit can further improve the compactness in the design of the support arm 60, the connecting arm 70 and the working arm 80, reduce a space occupied by the mechanical arm 001 in the folded state, and achieve high space efficiency of the mechanical arm 001, thereby achieving effortless folding and storage.

Further, when the connecting arm 70 is in the folded state relative to both the support arm 60 and the working arm 80, the connecting arm 70 is located above the support arm 60 and fits the support arm 60, and the working arm 80 is located above the connecting arm 70 and fits the connecting arm 70. That is, when the mechanical arm 001 is in the folded state, in a vertical direction, the connecting arm 70 is designed to fit the support arm 60, and the connecting arm 70 is designed to fit the working arm 80. Thus, the mechanical arm 001 in the folded state is not larger in size in the vertical direction. In addition, the design of close fit between the connecting arm 70 and the support arm 60 as well as between the connecting arm 70 and the working arm 80 can meet the design requirements of the device main body 010 for the compact structure and smaller dimensions, and can prevent a motion range of the mechanical arm from being affected by the too high device main body 010.

As shown in FIG. 7, in some possible embodiments provided by the present application, the bent structure includes a first bent part 710. The first bent part 710 is bent downward and hinged to the support arm 60 when the connecting arm 70 is in a horizontal state.

When the connecting arm 70 is in a folded state relative to the support arm 60, the support arm 60 is located below the connecting arm 70 in the horizontal state, so the first bent part 710 is bent downward when the connecting arm 70 is in the horizontal state. Thus, a middle part of the connecting arm 70 can reliably fit the support arm 60, and hence the support arm 60 and the connecting arm 70 can be compactly designed. Meanwhile, since the first bent part 710 is hinged to the support arm 60, the connecting arm 70 can rotate within a larger range relative to the support arm 60.

Further, one of the first bent part 710 and the support arm 60 is provided with a first protrusion, and the other is provided with a first recess. The first protrusion is engaged with the first recess to constrain the rotation of the connecting arm 70 relative to the support arm 60, such that the connecting arm 70 and the support arm 60 in the folded state can compactly fit together, thereby reducing the shaking between the connecting arm 70 and the support arm 60 and improving the stability of the connecting arm 70 and the support arm 60 after they are folded.

Specifically, the first protrusion may be arranged on the first bent part 710, and the first recess may be arranged in the support arm 60; or, the first recess may be arranged in the first bent part 710, and the first protrusion may be arranged on the support arm 60.

In the above embodiment, as shown in FIG. 7, the bent structure further includes a second bent part 720. The second bent part 720 is bent upward when the connecting arm 70 is in a horizontal state. The working arm 80 is provided with a third bent part hinged to the second bent part 720. A bending direction of the third bent part is opposite to a bending direction of the second bent part 720.

When the working arm 80 is in a folded state relative to the connecting arm 70, the working arm 80 is located above the connecting arm 70 in the horizontal state, and the support arm 60 is located below the connecting arm 70 in the horizontal state. Therefore, the second bent part 720 is bent upward when the connecting arm 70 is in the horizontal state, and is hinged to the third bent part on the working arm 80 having a bending direction opposite to the bending direction of the second bent part 720. Thus, the working arm 80 will neither interfere with the support arm 60, nor the connecting arm 70, and thus has a larger motion space. Meanwhile, such an arrangement can ensure that the middle part of the working arm 80 tightly fit a side surface of the connecting arm 70, such that the working arm 80 and the connecting arm 70 can be designed compactly.

Further, one of the second bent part 720 and the third bent part is provided with a second protrusion, and the other is provided with a second recess. The second protrusion is engaged with the second recess to constrain the rotation of the working arm 80 relative to the connecting arm 70. Further, the working arm 80 and the connecting arm 70 in the folded state can fit together compactly, thereby reducing the shaking between the working arm 80 and the connecting arm 70 and improving the stability of the working arm 80 and the connecting arm 70 after they are folded.

Specifically, the second protrusion may be arranged on the second bent part 720, and the second recess may be arranged in the third bent part; or, the second recess may be arranged in the second bent part 720, and the second protrusion may be arranged on the third bent part 60.

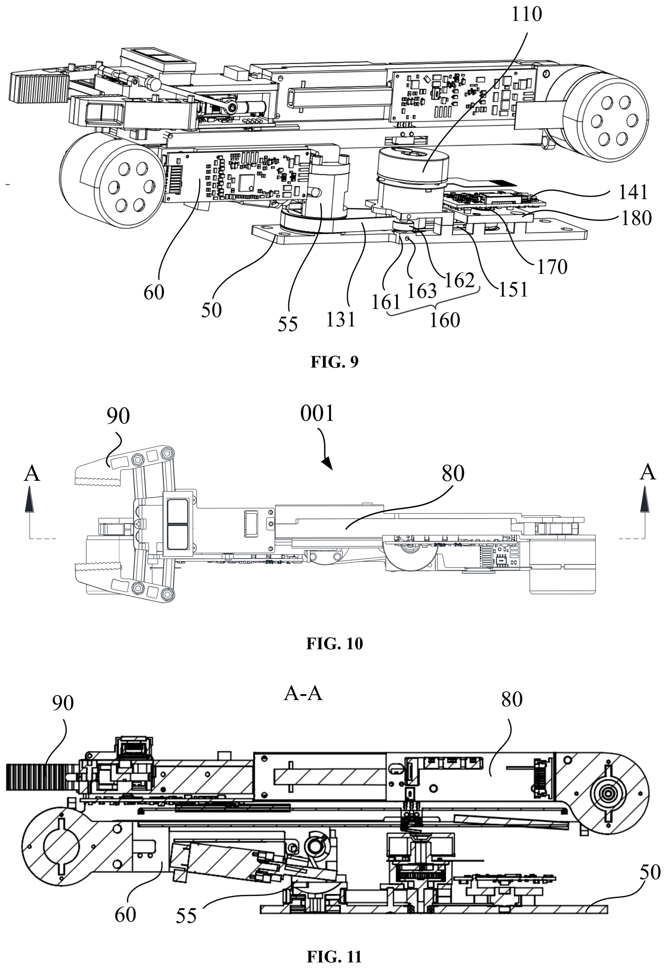

As shown in FIGs. 9, 10, 11 and 12, in some possible embodiments provided by the present application, the first mechanical joint 10 includes a first driving part 110, a rotatable joint 120, and a first transmission assembly 130. The first driving part 110 may be arranged on the base 50. The first transmission assembly 130 is configured for transmission connection of the first driving part 110 and the rotatable joint 120. The rotatable joint 120 is movably connected to the rotatable base 55. The first driving part 110 is configured to drive the rotatable joint 120 to rotate through the first transmission assembly 130, thereby enabling the rotatable base 55 to rotate relative to the base 50.

For the first mechanical joint 10 provided by the present application, the first transmission assembly 130 may be a belt transmission assembly, a rack-and-pinion transmission assembly, or other transmission assemblies that meet the requirements. The first transmission assembly 130 is configured to change a transmission direction of an output force from the first driving part 110. Thus, since the first transmission assembly 130 is configured for transmission connection of the first driving part 110 and the rotatable joint 120, the power from the first driving part 110 is changed in direction by the first transmission assembly 130 and then transmitted to the rotatable joint 120, and the rotatable base 55 is driven by the rotatable joint 120 to rotate relative to the base 50. Compared with a conventional manner where a first driving part directly drives a rotatable base to rotate in the related art, this arrangement can reduce the overall height and the overall dimensions of the mechanical arm 001, which can meet the design requirements of the mechanical arm 001 for a compact structure and smaller dimensions.

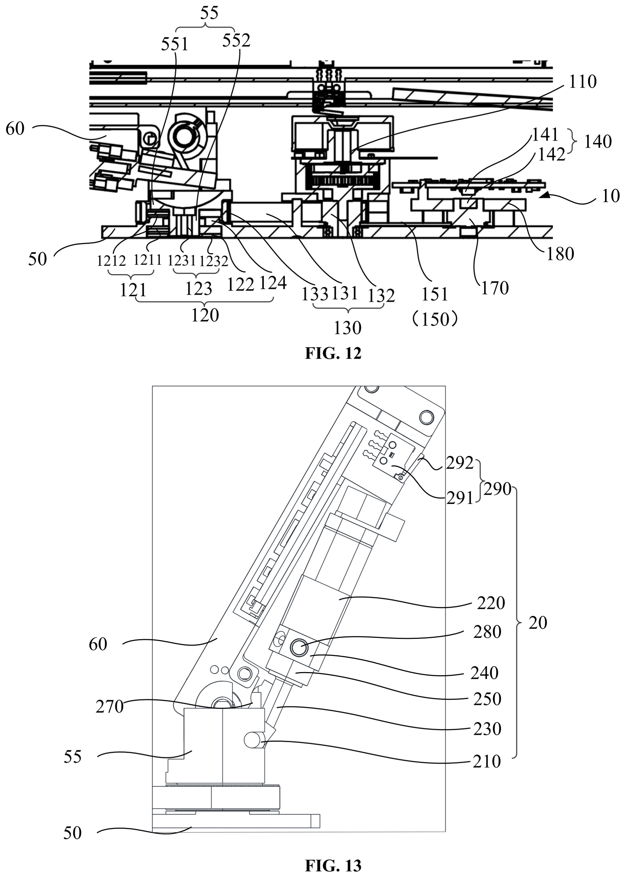

As shown in FIGs. 9 and 12, in some possible embodiments provided by the present application, the first transmission assembly 130 includes a first synchronizing wheel 132 and a second synchronizing wheel 133 which are in transmission connection through a first transmission belt 131. The first synchronizing wheel 132 is connected to the first driving part 110, and the second synchronizing wheel 133 is connected to the rotatable base 55. The rotatable base 55 is movably connected to the base 50 through the rotatable joint 120.

The first driving part 110 may be a motor. The first driving part 110 is mounted on the base 50, and the first synchronizing wheel 132 is connected to an output shaft of the motor. Thus, the first driving part 110 works to drive the first synchronizing wheel 132 to rotate, and the second synchronizing wheel 133 is driven to rotate by the first transmission belt 131. Since the rotatable base 55 is movably connected to the base 50 through the rotatable joint 120, the rotatable base 55 can be driven to rotate relative to the base 50. Since the first synchronizing wheel 132 and the second synchronizing wheel 133 are arranged in parallel, i.e., the two synchronizing wheels of the first transmission assembly 130 are arranged in parallel, the first driving part 110 and the support arm 60 can be arranged relatively parallel. Compared with the related art where the first driving part and the rotatable base 55 are required to be axially arranged in sequence when the rotatable base 55 is directly driven by the first driving part, this arrangement can reduce an axial distance of the entire mechanical arm 001, thereby meeting the design requirements of the mechanical arm 001 for a compact structure and smaller dimensions, and expanding the operational range of the product.

As shown in FIG. 12, in some possible embodiments provided by the present application, the rotatable joint 120 includes a rolling assembly 121 located between the rotatable base 55 and the base 50. The rolling assembly 121 includes a ball or a rolling needle, that is, the rotatable base 55 is in rolling connection with the base 50. Due to such an arrangement of the rolling assembly 121, the rotatable joint can bear an axial load during rotating, which is further conductive to improving the reliability of the product. Specifically, the rolling assembly 121 is a thrust bearing apparatus.

As shown in FIG. 12, in some possible embodiments provided by the present application, the rotatable base 55 includes a first rotatable shaft 552 inserted into the base 50 and a surface 551 located at the upper part of the first rotatable shaft 552. The rolling assembly 121 sleeves the first rotatable shaft 552 of the rotatable base 55, and the second synchronizing wheel 133 is connected to the surface 551. The rolling assembly 121 includes a first rolling assembly 1211 and a second rolling assembly 1211 which are distributed at two opposite ends of the base 50. The two opposite surfaces of the base 50 are in rolling contact with the first rolling assembly 1211 and the second rolling assembly 1212, respectively.

The first rolling assembly 1211 and the second rolling assembly 1212 cooperate with each other to form a bearing apparatus. Thus, the first driving part 110 works to drive the first synchronizing wheel 132 to rotate, and the second synchronizing wheel 133 can be driven to rotate through the first transmission belt 131. Since the base 50 is in rolling connection with the first rotatable shaft 552 of the rotatable base 55 through the first rolling assembly 1211 and the second rolling assembly 1212, the rotatable base 55 can further rotate relative to the base 50.

Specifically, the first rolling assembly 1211 and the second rolling assembly 1212 may be both balls or rolling needles, and the two rolling assemblies 121 cooperate with each other to form the bearing apparatus. Specifically, the two rolling needle or ball assemblies cooperate with each other to form a thrust bearing. The two opposite surfaces of the base 50 are in rolling contact with the first rolling assembly 1211 and the second rolling assembly 1212, respectively, that is, the first rolling assembly 1211 and the second rolling assembly 1212 are in direct contact with the base 50.

The traditional bearings include the balls or rolling needles and upper and lower spacers per se, but for the first mechanical joint 10 provided by the embodiment of the present application, the first rolling assembly 1211 and the second rolling assembly 1212 are in rolling contact with the two opposite surfaces of the base 50, respectively, such that the arrangement of the spacer between the first rolling assembly 1211 and the base 50 and the spacer between the second rolling assembly 1212 and the base 50 is simplified, which can further reduce the axial height of the mechanical joint, can meet the design requirements of the mechanical joint for the compact structure and smaller dimensions and can thus further meet the design requirements of the mechanical arm 001 for the compact structure and smaller dimensions.

In the above embodiment, as shown in FIGs. 10 and 12, the surface 551 of the rotatable base 55 is located outside the base 50. For example, the surface 551 of the rotatable base 55 is located above the base 50, and an end of the second rolling assembly 1212 away from the first rolling assembly 1211 is in rolling contact with a side of the surface 551 facing the base 50, that is, the second rolling assembly 1212 is located above the first rolling assembly 1211. The two end surfaces. i.e., upper and lower end surfaces, of the second rolling assembly 1212 are in rolling contact with the surface 551 of the rotatable base 55 and the base 50, respectively, that is, the surface 551 of the rotatable base 55 and the base 50 are directly used as two spacers, i.e., upper and lower spacers of the second rolling assembly 1212. Compared with the traditional bearing, such an arrangement simplifies the arrangement of the two spacers, i.e., upper and lower spacers, of the second rolling assembly 1212, which can further reduce the axial height of the rotatable joint 120 and thus the axial height of the first mechanical joint 10, and can further meet the design requirements of the first mechanical joint 10 for a compact structure and smaller dimensions.

As shown in FIG. 12, in some possible embodiments provided by the present application, the rotatable joint 120 further includes: a first spacer 122 and a pre-tightening assembly 123. An end of the first rolling assembly 1211 away from the second rolling assembly 1212 is in rolling contact with the first spacer 122. The pre-tightening assembly 123 is configured to adjust the distance between the first rolling assembly 1211 and the second rolling assembly 1212 through the first spacer 122.

In the present embodiment, two end surfaces, i.e., upper and lower end surfaces, of the first rolling assembly 1211 are in rolling contact with the base 50 and the first spacer 122, respectively. Since the pre-tightening assembly 123 can adjust the distance between the first rolling assembly 1211 and the second rolling assembly 1212 through the first spacer 122, the first rolling assembly 1211 and the second rolling assembly 1212 can be tightened. Therefore, the stiffness of the first mechanical joint 10 can be greatly improved within a limited space.

In the above embodiment, as shown in FIG. 10, the pre-tightening assembly 123 includes a first adjusting member 1231 and a first pre-tightening spacer 1232. The first pre-tightening spacer 1231 is located on a side of the first spacer 122 away from the first rolling assembly 1211. The first adjusting member 1231 penetrates through the first pre-tightening spacer 1232 and is movably connected to the first rotatable shaft 552 of the rotatable base 55. The rotation of the first adjusting member 1231 can drive the first pre-tightening spacer 1232 to move vertically relative to the first rotatable shaft 552 of the rotatable base 55, so as to adjust the distance between the first rolling assembly 1211 and the second rolling assembly 1212.

For example, the first adjusting member 1231 includes a first stem part and a first head part. For example, in the case that the first adjusting member 1231 is a bolt, a threaded hole is formed in the bottom of the first rotatable shaft 552 of the rotatable base 55. The first stem part penetrates through the first pre-tightening spacer 1232 and is connected to the first rotatable shaft 552. The first head part is clamped on a side of the first pre-tightening spacer 1232 away from the first spacer 122. The first spacer 122 is located between the first pre-tightening spacer 1232 and the first rolling assembly 1211. Thus, by rotating the first adjusting member 1231, the first pre-tightening spacer 1232 can be driven to move vertically along the first rotatable shaft 552 along with the first adjusting member 1231. Thus, the first rolling assembly 1211 can be pushed by the first spacer 122 to move close to or away from the second rolling assembly 1212, which can further adjust the distance between the first rolling assembly 1211 and the second rolling assembly 1212 and further tighten the first rolling assembly 1211 and the second rolling assembly 1212.

In some possible embodiments provided by the present application, as shown in FIG. 12, the rotatable joint 120 further includes a sliding sleeve 124. Specifically, the sliding sleeve 124 may be a copper sleeve or other structures that meet the requirements. The sliding sleeve 124 sleeves the first rotatable shaft 552 of the rotatable base 55, is located between the first rolling assembly 1211 and the second rolling assembly 1212, and is accommodated in a first mounting groove arranged on a side of the base 50 facing the first rolling assembly 1211. By arranging the sliding sleeve 124, it can bear a radial force, which is conductive to improving the reliability of the rotatable joint 120.

In other words, the first mechanical joint 10 is constrained by three bearings. Specifically, the bearings are a thrust rolling needle bearing of the first rolling assembly 1211, a thrust rolling needle bearing of the second rolling assembly 1212, and a sliding bearing of the sliding sleeve 124. Thus, the rotatable joint 120 can withstand both axial and radial forces, and the reliability of the rotatable joint 120 is greatly improved.

In some possible embodiments provided by the present application, as shown in FIGs. 9 and 12, the first mechanical joint 10 further includes: a detecting shaft 170, a first rotation angle detecting apparatus 140, and a second synchronizing pulley assembly 150. The detecting shaft 170 is rotatably arranged on the base 50. For example, the detecting shaft 170 may be arranged parallel to the output shaft of the first driving part 110. The second synchronizing pulley assembly 150 is configured for transmission connection of the detecting shaft 170 and the output shaft of the first driving part 110. The first rotation angle detecting apparatus 140 is configured to detect a rotation angle of the detecting shaft 170.

Since the second synchronizing pulley assembly 150 is configured for transmission connection of the detecting shaft 170 and the output shaft of the first driving part 110, a rotation angle of the output shaft of the first driving part 110 can be known by detecting the rotation angle of the detecting shaft 170 by the first rotation angle detecting apparatus 140, thereby achieving the measurement of the rotation angle of the output shaft of the first driving part 110. Meanwhile, since the detecting shaft 170 is arranged relatively parallel to the output shaft of the first driving part 110 and the first rotation angle detecting apparatus 140 is arranged on the detecting shaft 170, compared with the related art where the first rotation angle detecting apparatus is directly arranged at the upper part of the first driving part to detect the rotation angle of the output shaft of the first driving part, this arrangement reduces the axial height of the first driving part 110. Thus, the axial height of the first mechanical joint 10 is reduced, such that the axial height of the entire mechanical arm 001 is reduced, thereby meeting the design requirements of the mechanical arm for a compact structure and smaller dimensions.

In other words, for the first mechanical joint 10 provided by the embodiment of the present application, in order to solve the problem of a larger overall height of a first driving part caused by arranging a first rotation angle detecting apparatus on the first driving part in a conventional mechanical joint, the first rotation angle detecting apparatus is moved from the vertical upper part of the output shaft of the first driving part to the detecting shaft 170 arranged parallel to the first driving part in the horizontal direction. Since the detecting shaft 170 is in transmission connection with the output shaft of the first driving part 110 through the second synchronizing pulley assembly 150, the rotation angle of the output shaft of the first driving part 110 can be measured while reducing the overall height of the first mechanical joint 10.

In the above embodiment, as shown in FIGs. 9 and 12, the first mechanical joint 10 further includes a fixing frame 180. The fixing frame 180 is connected to the base 50 and erected on a circumferential side of the detecting shaft 170. The second synchronizing pulley assembly 150 includes a third synchronizing wheel and a fourth synchronizing wheel which are connected through a second transmission belt 151. The third synchronizing wheel is connected to the output shaft of the first driving part 110, i.e., the third synchronizing wheel and the first synchronizing wheel 132 are arranged coaxially. The fourth synchronizing wheel is connected to the detecting shaft 170. It can be understood that the fourth synchronizing wheel may be located inside the fixing frame 180. The first rotation angle detecting apparatus 140 includes a magnetic induction member 141 and a magnetic member 142. The magnetic induction member 141 is arranged on the fixing frame 180 and the magnetic member 142 is arranged on the detecting shaft 170. Thus, the rotation of the output shaft of the first driving part 110 drives the third synchronizing wheel to rotate. Through the second transmission belt 151, the fourth synchronizing wheel is driven to rotate, and then, the detecting shaft 170 and the magnetic member 142 on the detecting shaft 170 can be driven to rotate. The magnetic induction member 141 can achieve the measurement of the rotation angle of the detecting shaft 170 based on sensed positional changes of the magnetic member 142, achieving a simple structure and easy implementation.

Specifically, the detecting shaft 170 and the rotatable base 55 may be distributed on two opposite sides of the first driving part 110. Thus, the space and structure of the base 50 can be reasonably utilized, and the design requirements of the mechanical arm 001 for the compact structure and smaller dimensions are achieved.

Specifically, the magnetic member 142 is a magnet, the magnetic induction member 141 is a Hall sensor, and the magnetic member 142 is fixed on the detecting shaft 170 by means of an adhesive, a clamping slot, etc.

In some possible embodiments provided by the present application, as shown in FIG. 9, the first mechanical joint 10 further includes a tensioning apparatus 160. The tensioning apparatus 160 is configured to adjust a tensioning degree of the first transmission belt 131 in the first transmission assembly 130, so as to improve the transmission efficiency and accuracy of the first transmission assembly 130 and improve the accuracy of the rotation of the rotatable base 55 relative to the base 50.

In the above embodiment, the tensioning apparatus 160 includes a guiding part 161, a tensioning shaft and a second adjusting member. The guiding part 161 may be arranged on the base 50 to reasonably use the structure of the base 50. The inner bottom of the guiding part 161 is provided with a sliding slot 9511. The tensioning shaft is inserted into the guiding part 161, for example, the tensioning shaft is inserted into the guiding part 161 from above, and an end portion of the tensioning shaft is located in the sliding slot 9511 and may slide close to or away from the first transmission belt 131 along a guiding slot. A portion of the tensioning shaft outside the guiding part 161 is provided with a tensioning bearing 162 connected to the first transmission belt 131. The second adjusting member is inserted into an adjusting hole 163 of the guiding part 161 and abutted against the tensioning shaft. By adjusting the connection position between the second adjusting member and the guiding part 161, the position of the tensioning shaft in the guiding slot can be adjusted, and thus a tensioning operation can be performed on the first transmission belt 131.

The second adjusting member may be a bolt. An adjusting hole 163 is formed in a side surface of the guiding part 161. The adjusting hole 163 is a threaded hole. The second adjusting member is connected to the threaded hole and can be abutted against the tensioning shaft located inside the guiding part 161. By screwing the second adjusting member, the tensioning shaft can be moved in a direction close to or away from the first transmission belt 131. Since the first transmission belt 131 is rotatably connected to the tensioning shaft through the tensioning bearing 162, the tensioning operation of the first transmission belt 131 can be achieved, achieving a simple structure and convenient operation.

As shown in FIGs. 13, 14 and 15, in some possible embodiments provided by the present application, the second mechanical joint 20 includes a second driving part 220, a first screw rod 230, and a first guiding nut 210. The first guiding nut 210 is in threaded connection with the first screw rod 230 and is hinged to the rotatable base 55. The second driving part 220 is arranged on the support arm 60. A first end of the first screw rod 230 is connected to the second driving part 220, and a second end of the first screw rod 230 passes through the first guiding nut 210 and is arranged to face the rotatable base 55. The second driving part 220 is configured to drive the first screw rod 230 to rotate, such that the first screw rod 230 and the first guiding nut 210 move relatively to drive the support arm 60 to be raised or lowered relative to the rotatable base 55.

The second driving part 220 may be a motor. An output shaft of the motor is connected to the first screw rod 230. For example, the output shaft of the second driving part 220 is connected to the first screw rod 230 through an adhesive. It can be understood that the output shaft of the second driving part 220 and the first screw rod 230 can also be connected through keys or other means. The output shaft of the second driving part 220 rotates to drive the first screw rod 230 to rotate, such that the first guiding nut 210 and the first screw rod 230 can move relatively. Because the first guiding nut 210 is hinged to the rotatable base 55 and the second driving part 220 is arranged on the support arm 60, the first screw rod 230 can move relative to the first guiding nut 210 in a direction close to the rotatable base 55 or away from the rotatable base 55, and then the support arm 60 can be raised or lowered relative to the rotatable base 55.

In other words, for the second mechanical joint 20 provided in the embodiment of the present application, the second driving part 220 is arranged on the support arm 60, and the first guiding nut 210 is hinged to the rotatable base 55 and is in threaded connection with the first screw rod 230. The second driving part 220 drives the first screw rod 230 to rotate relative to the first guiding nut 210, such that the first screw rod 230 can move relative to the first guiding nut 210, and then the support arm 60 can be raised or lowered relative to the rotatable base 55. That is, the support arm 60 can be in a folded state or an unfolded state relative to the rotatable base 55, so as to meet different functional requirements of the mechanical arm 001.

It can be understood that when the support arm 60 is in the folded state relative to the rotatable base 55, for example, the support arm 60 is in a horizontal position, that is, when the support arm 60 is in a zero-position state, the mechanical arm 001 may be in a storage position without working, thereby reducing a space occupied by the mechanical arm 001; and when the support arm 60 is in the unfolded state relative to the rotatable base 55, for example, the support arm 60 is unfolded to a vertical position relative to the rotatable base 55, the mechanical arm 001 may be in an unfolded state to perform operations. Through the cooperation of the second driving part 220, the first screw rod 230 and the first guiding nut 210, the support arm 60 can be raised or lowered relative to the rotatable base 55, thereby achieving a simple structure and convenient operation, and being able to meet the design requirements of the mechanical arm 001 for the compact structure and smaller dimensions.

Further, the support arm 60 is hinged to the rotatable base 55, and the first guiding nut 210 is hinged to the rotatable base 55, such that the first guiding nut 210 and the rotatable base 55 do not interfere with each other when the second driving part 220 drives the first screw rod 230 to move relative to the first guiding nut 210 so as to drive the support arm 60 to be raised or lowered relative to the rotatable base 55. That is, the first guiding nut 210 can rotate relative to the rotatable base 55 to ensure that the first screw rod 230 moves, relative to the first guiding nut 210, within a certain range, which matches a rotation range of the support arm 60 relative to the rotatable base 55.

It can be understood that a rotation angle of the first guiding nut 210 relative to the rotatable base 55 needs to be greater than or equal to a rotation range of the support arm 60 relative to the rotatable base 55 so as to meet the use requirements of the mechanical arm 001. For example, the rotation range of the first guiding nut 210 relative to the rotatable base 55 may be 90° to 360°, or other ranges that meet the requirements.

Specifically, a first cylindrical boss is arranged on a side of the first guiding nut 210 facing the rotatable base 55, and the first guiding nut 210 is hinged to the rotatable base 55 through the first cylindrical boss. Such an arrangement makes the rotation range of the first guiding nut 210 relative to the rotatable base 55 up to 360°, and thus can meet the demand that the support arm 60 has a relatively large raising range relative to the rotatable base 55 and expand the operational range of the product. In addition, the first cylindrical boss is simple in structure, and thus is convenient to machine and assemble, and lower in cost.

In some possible embodiments provided by the present application, as shown in FIG. 13, the second mechanical joint 20 further includes a motor seat 240. The motor seat 240 is hinged to the support arm 60. That is, the motor seat 240 can rotate relative to the support arm 60. The second driving part 220 is mounted on the motor seat 240. The first screw rod 230 is inserted into the motor seat 240 and connected to the second driving part 220. Such an arrangement makes the second driving part 220 connected to the first screw rod 230 not interfere with the support arm 60 when the support arm 60 is raised or lowered relative to the rotatable base 55, and then ensures that the first screw rod 230 can move smoothly relative to the first guiding nut 210 without getting stuck, and further improve the operational reliability and smoothness of the second mechanical joint 20.

Specifically, a second cylindrical boss is arranged on a side of the motor seat 240 facing the support arm 60, and the motor seat 240 is hinged to the support arm 60 through the second cylindrical boss. Such an arrangement makes the rotation range of the motor seat 240 relative to the support arm 60 up to 360°, and thus can meet the demand that the support arm 60 has a relatively large raising range relative to the rotatable base 55. In addition, the second cylindrical boss is simple in structure, and thus is convenient to machine and assemble, and lower in cost.

In other words, for the second mechanical joint 20 provided by the embodiment of the present application, the support arm 60 is hinged to the rotatable base 55, the first guiding nut 210 is hinged to the rotatable base 55, and the motor seat 240 is hinged to the support arm 60, so a movable triangular structure is formed. The first screw rod 230 is connected to the second driving part 220 and passes through the first guiding nut 210, such that the second driving part 220 drives the first screw rod 230 to rotate, and then the first screw rod 230 can move relative to the first guiding nut 210, so as to achieve the raising or lowering of the support arm 60 relative to the rotatable base 55, achieving a simple structure.

In some possible embodiments provided by the present application, as shown in FIGs. 13, 14 and 15, the second mechanical joint 20 further includes a thrust bearing 250. The first screw rod 230 is sleeved with the thrust bearing 250, the first screw rod 230 is provided with a first stepped structure 231, and the thrust bearing 250 is located between the first stepped structure 231 and the motor seat 240, such that the first screw rod 230 is rotatably connected to the motor seat 240. Such an arrangement ensures that an axial thrust of the first screw rod 230 is supported by the motor seat 240, and is then conducive to prolonging the service life of the first screw rod 230, and improving the reliability of the mechanical joint.

In some possible embodiments provided by the present application, as shown in FIG. 13, the second mechanical joint 20 further includes an elastic member 260. The elastic member 260 is connected to the rotatable base 55 and the support arm 60. The elastic member 260 is configured to apply a thrust to the support arm 60 in a direction close to the rotatable base 55.

Due to the arrangement of the elastic member 260, the support arm 60 has a pre-tightening force for rolling it toward the rotatable base 55. As shown in FIG. 13, the elastic member 260 makes the support arm 60 have a downward (clockwise as shown in FIG. 13) pre-tightening force, thereby eliminating gaps in a triangular structure formed by hinging the support arm 60 to the rotatable base 55, hinging the first guiding nut 210 to the rotatable base 55, and hinging the motor seat 240 to the support arm 60, reducing the shaking during the raising or lowering of the support arm 60 relative to the rotatable base 55, and improving the operational stability and reliability of the second mechanical joint 20.

Specifically, the elastic member 260 may be a torsion spring. It can be understood that the elastic member 260 may also be of other structures that meet the requirements. One end of the torsion spring is connected to the rotatable base 55, and the other end of the torsion spring is connected to the support arm 60. For example, both ends of the torsion spring are hooked on the rotatable base 55 and the support arm 60, respectively.

In some possible embodiments provided by the present application, as shown in FIG. 12, the second mechanical joint 20 further includes an anti-pulling member 280. The first screw rod 230 is provided with an anti-pulling groove 232 located inside the motor seat 240, and the anti-pulling member 280 is connected to the motor seat 240 and extends into the anti-pulling groove 232. Due to the arrangement of the anti-pulling member 280, the second driving part 220 is well protected, which is conducive to prolonging the service life of the second driving part 220.

Further, a clearance is arranged between the anti-pulling member 280 and the anti-pulling groove 232, that is, there is a clearance between the anti-pulling member 280 and each of two side walls and a bottom wall of the anti-pulling groove 232. Such an arrangement makes the first screw rod 230 not contact with the anti-pulling member 280 under the condition of normal operation, that is, the anti-pulling member 280 does not hinder the normal rotation of the first screw rod 230, and then ensures the operational reliability of the second mechanical joint 20.

The distance between the anti-pulling member 280 and a groove wall on a side of the anti-pulling groove 232 close to the second driving part 220 is less than an axial play of an output shaft of the second driving part 220. By means of such an arrangement, when the first screw rod 230 is pulled, for example, when the support arm 60 is used in an abnormal use scene, e.g., when the support arm 60 is manually raised, the output shaft of the second driving part 220 is pulled out within its axial play range. The anti-pulling member 280 is in contact with the groove wall on the side of the anti-pulling groove 232 close to the second driving part 220, such that a pulling force is applied to the anti-pulling member 280, and the output shaft of the second driving part 220 is not subject to an axial force in this case, thereby protecting the second driving part 220, being conducive to prolonging the service life of the second driving part 220, reducing a failure rate of the second mechanical joint 20, and prolonging the service life of the second mechanical joint 20.

In the above embodiment, the anti-pulling member 280 is an anti-pulling bolt, and the anti-pulling groove 232 is an annular groove. The anti-pulling bolt is a standard relatively-low-cost part that facilitates the connection with the motor seat 240, thereby achieving simple assembly. The anti-pulling groove 232 is an annular groove which is convenient to machine, and thus conducive to reducing the machining cost.

In some possible embodiments provided by the present application, as shown in FIG. 13, the second mechanical joint 20 further includes a limit switch 290. The limit switch 290 is arranged on the support arm 60, and the second driving part 220 rotates or stops rotating according to a trigger state of the limit switch 290. When the support arm 60 rotates to a first preset position, the limit switch 290 is triggered.

The first preset position may be that the support arm 60 is in a zero-position state. For example, when the support arm 60 is in a horizontal position, if the support arm 60 continues to rotate towards the rotatable base 55, for example, continues to rotate downward, the hinging stability between the support arm 60 and the rotatable base 55, the hinging stability between the first guiding nut 210 and the rotatable base 55, and the connecting stability between the first screw rod 230 and the second driving part 220 will be compromised, which further likely causes the failure of the second mechanical joint 20. Therefore, when the support arm 60 rotates to the first preset position, the limit switch 290 arranged on the support arm 60 is triggered, and the second driving part 220 is controlled to stop rotating according to a trigger signal of the limit switch 290. This can avoid the failure of the second mechanical joint 20 caused by continuous rotation of the second driving part 220, further well protects the mechanical joint, and contributes to prolonging the service life of the mechanical joint, thereby improving the reliability of the mechanical arm 001.

It may be understood that when the support arm 60 does not rotate to the first preset position, that is, when the support arm 60 is in an inclined or vertical state, the limit switch 290 is not triggered, and the second driving part 220 does not receive the trigger signal of the limit switch 290. Therefore, the second driving part 220 can be controlled to continue rotating according to other control programs.

In the above embodiment, as shown in FIG. 13, the limit switch 290 includes a switch main body 291 and a trigger 292. The switch main body 291 is arranged on one side of the support arm 60. One end of the trigger 292 is connected to the switch main body 291 and the other end of the trigger 292 extends away from the switch main body 291, that is, the other end of the trigger 292 extends outward from the surface of the support arm 60 where the switch main body 291 is located. When the support arm 60 rotates to the first preset position, for example, when the support arm 60 rotates to the horizontal position, i.e., to be in the zero-position state, relative to the rotatable base 55, the other end of the trigger 292 is fitted to be abutted against a foreign object and to be in contact with the switch main body 291 to trigger the limit switch 290.

It can be understood that the foreign object may be other structures than the second mechanical joint 20 per se, for example, the foreign object may be other structures of the mechanical arm 001, or the foreign object may also be a structure arranged in a holding chamber 011 of the device main body 010 of the self-moving cleaning device 002. Specifically, the foreign object may be a housing of the first driving part. When the support arm 60 rotates to the first preset position, that is, the support arm 60 is horizontally placed, i.e., in the zero-position state, it can be understood that the switch main body 291 is arranged on the bottom side of the support arm 60 when the support arm 60 is in the first position, such that the end of the trigger 292 away from the switch main body 291 can be abutted against the foreign object and in contact with the switch main body 291 to trigger the limit switch 290. Thus, the second driving part 220 can stop working according to the trigger signal of the limit switch 290 to prevent the support arm 60 from continuing downward movement that could damage the second mechanical joint 20, thereby protecting the mechanical arm 001.

In some possible embodiments provided by the present application, the second mechanical joint 20 further includes a second rotation angle detecting apparatus. The second rotation angle detecting apparatus is arranged on the second driving part 220 and configured to detect a rotation angle of the output shaft of the second driving part 220. The second driving part 220 also rotates or stops rotating according to a detection result of the second rotation angle detecting apparatus. Thus, the support arm 60 can be flexibly controlled to rotate relative to the rotatable base 55 to any required angular position, so as to meet the requirements of different working conditions of the mechanical arm 001 and expand the operational range of the product.

Specifically, a mechanical self-locking structure may be arranged on the second mechanical joint 20. When the support arm 60 rotates relative to the rotatable base 55 to a vertical state, the mechanical self-locking structure acts to lock the support arm 60 relative to the rotatable base 55 in this position. Meanwhile, the second driving part 220 may be de-energized, thereby eliminating the power consumed by the second mechanical joint 20 when the mechanical arm 001 is under load.

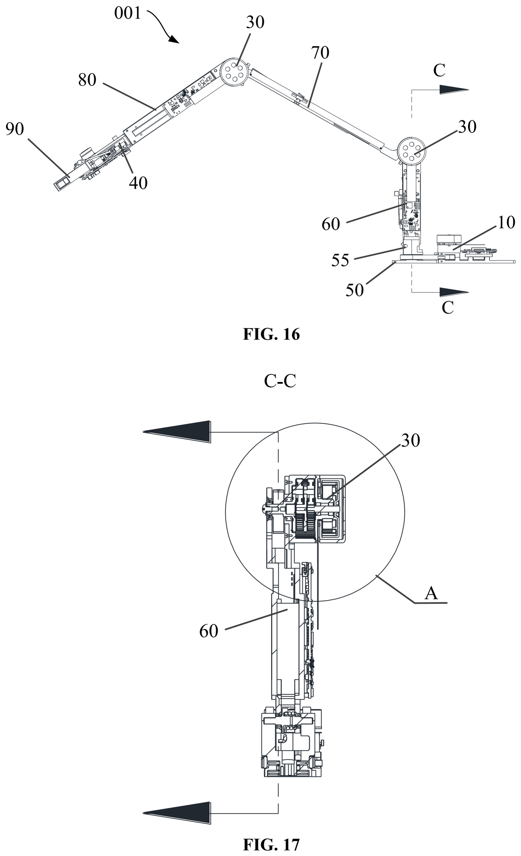

As shown in FIGs. 16, 17, 18, 19, 20, 21 and 22, in some possible embodiments provided by the present application, the third mechanical joint 30 includes a third driving part connected to a first arm. The third driving part includes a motor 310 and a planetary speed-reducing mechanism 320. The motor 310 includes a first output shaft 311. An input end of the planetary speed-reducing mechanism 320 is connected to a first output shaft 311, and an output end of the planetary speed-reducing mechanism 320 is connected to a second arm to drive the second arm to rotate relative to the first arm. The first arm is the connecting arm 70. Both ends of the connecting arm 70 are connected to the output end of the planetary speed-reducing mechanism 320, respectively. The second arm is the support arm 60 or the working arm 80.

That is, a brushless servo speed-reducing motor is used as the third driving part of the third mechanical joint 30, a speed-reducing gearbox is used as the planetary speed-reducing mechanism 320, and the planetary speed-reducing mechanism 320 is configured to connect the motor 310 to the second arm, such that the power from the motor 310 is transmitted to the second arm after speed reduction to drive the second arm to rotate relative to the first arm. That is, the third mechanical joint 30 provided in the embodiment of the present application is a rotatable mechanical joint. The third mechanical joints 30 are connected to both ends of the connecting arm 70, such that the connecting arm 70 is rotatably connected to the support arm 60 and the working arm. Specifically, both ends of the connecting arm 70 are connected to the support arm 60 and the working arm 80 respectively through the third mechanical joints 30. That is, when one of the third mechanical joints 30 connects the connecting arm 70 to the support arm 60, the connecting arm 70 is equivalent to the first arm, and the support arm 60 is equivalent to the second arm; and when the other third mechanical joint 30 connects the connecting arm 70 to the working arm 80, the connecting arm 70 is equivalent to the first arm, and the working arm 80 is equivalent to the second arm.

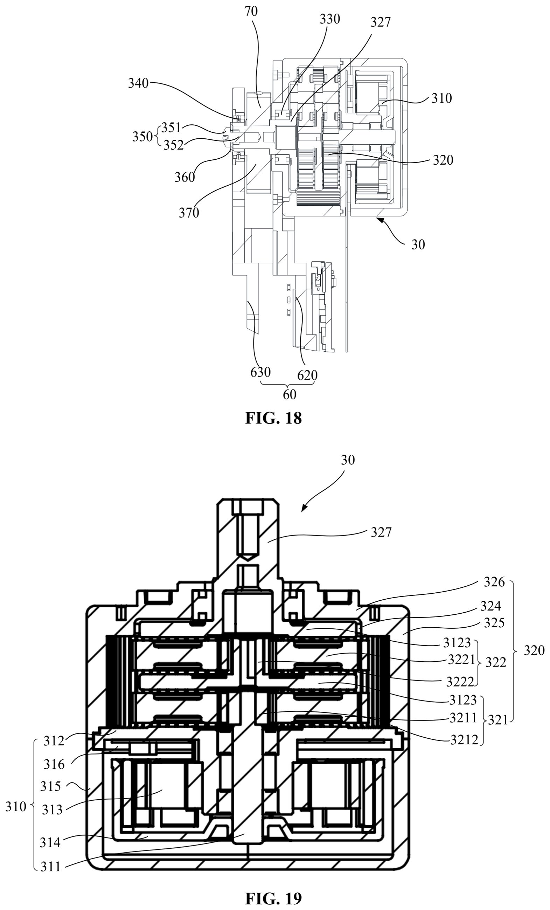

In the above embodiment, as shown in FIG. 19, the motor 310 further includes a motor base plate 312, a stator 313 and a rotor 314. The rotor 314 is located outside the stator 313, a first output shaft 311 penetrates through the motor base plate 312, and the stator 313 is connected to the motor base plate 312 and located on a circumferential side of the first output shaft 311. The planetary speed-reducing mechanism 320 includes a primary gear set 321, and the primary gear set 321 is connected to the first output shaft 311 and arranged adjacent to the motor base plate 312.

That is, the motor 310 is an outer rotor 314 motor 310, and the first output shaft 311 of the motor 310 penetrates through the motor base plate 312 and is connected to the primary gear set 321 of the planetary speed-reducing mechanism 320, such that the power is transmitted to the planetary speed-reducing mechanism 320. The stator 313 of the motor 310 is connected to the motor base plate 312 and located on the circumferential side of the first output shaft 311. That is, the stator 313 is arranged coaxially with the first output shaft 311. As the primary gear set 321 is arranged adjacent to the motor base plate 312, the motor base plate 312 may be used as an input end cover of the planetary speed-reducing mechanism 320, that is, the motor base plate 312 integrates the functions of both the motor base plate 312 and the input end cover of the gearbox. When this motor is compared with a planetary reducing-speeding motor in the related art, the input end cover of the gearbox, i.e., the planetary speed-reducing mechanism is simplified, such that the structure is simple and the cost is lower. In addition, this can meet design requirements of the third mechanical joint 30 for the compact structure and smaller dimensions. Meanwhile, the concentricity of the motor 310 and the planetary speed-reducing mechanism 320, i.e., the gearbox can be improved, which is conducive to reducing the wear of the gearbox, improving the reliability of the third mechanical joint 30, also reducing the noise of the third mechanical joint 30 during working, reducing the impact on the user, and improving the user satisfaction in use.

In the above embodiment, an annular boss is arranged on a side of the motor base plate 312 away from the primary gear set 321, and the first output shaft 311 permeates through the annular boss and is rotatably connected to the annular boss. Specifically, the first output shaft 311 passes through the annular boss, the first output shaft 311 is sleeved with a bearing, and the bearing is located between the first output shaft 311 and the annular boss, so as to achieve the rotational connection between the first output shaft 311 and the annular boss.

The first output shaft 311 is arranged coaxially with the annular boss, and the stator 313 is distributed on the circumferential side of the annular boss. Therefore, the stator 313 can be distributed on the circumferential side of the first output shaft 311, and is arranged coaxially with the first output shaft 311, thereby achieving a simple structure and easy implementation.

Further, the motor 310 further includes a Hall plate 316. That is, the motor 310 of the third mechanical joint 30 in the embodiment of the present application is a Hall motor. The Hall plate 316 is connected to the motor base plate 312, and the Hall plate 316 is located between the stator 313 and the motor base plate 312 along an axial direction of the first output shaft 311. Due to the arrangement of the Hall plate 316, the position of the rotor 314 can be well detected, such that the motor 310 is stable in use, large in torque during starting and free of abnormal noise. Therefore, the working noise of the mechanical joints is further reduced, and the impact on the user is reduced.

In some possible embodiments provided by the present application, as shown in FIG. 19, the motor 310 further includes a motor housing 315. The motor housing 315 is connected to the motor base plate 312, enclosing and forming a motor mounting chamber 317. The stator 313 and the rotor 314 are located in the motor mounting chamber 317. It can be understood that the Hall plate 316 is also located in the motor mounting chamber 317. Therefore, the stator 313 and the rotor 314 are protected by the motor housing 315 and the motor base plate 312, thereby prolonging the service life of the motor 310, and improving the reliability of the mechanical joints.

In some possible embodiments provided by the present application, as shown in FIG. 19, the planetary speed-reducing mechanism 320 further includes a secondary gear set 322, an inner gear ring 325 and an output end cover 326. The output end cover 326 is connected to the first arm; and both ends of the inner gear ring 325 are connected to the motor base plate 312 and the output end cover 326 respectively, enclosing and forming a speed-reducing mounting chamber 324. The primary gear set 321 is located in the speed-reducing mounting chamber 324 and includes a first sun gear 3211, a first planetary gear 3212 and a first planetary rack 3213. The first sun gear 3211 is fixed to the first output shaft 311. The secondary gear set 323 is arranged adjacent to the output end cover 326 and includes a second sun gear 3221, a second planetary gear 3222 and a second planetary rack 3223 which are located in the speed-reducing mounting chamber 324. The first planetary gear 3212 and the second planetary gear 3222 are both meshed with the inner gear ring 325. The second sun gear 3221 is fixed to the first planetary rack 3213. The second planetary rack 3223 includes a second output shaft 327 penetrating through the output end cover 326. The second output shaft 327 is, as an output end, connected to the second arm.

In the present embodiment, the planetary speed-reducing mechanism 320 is a secondary planetary speed-reducing mechanism. The power from the motor 310 is transmitted to the first planetary gear 3212 through the first output shaft 311 via the first sun gear 3211 and the first planetary gear 3212 of the primary gear set 321, which are meshed with each other. Since the first planetary gear 3212 of the primary gear set 321 is meshed with the inner gear ring 325, the first planetary gear 3212 is driven to rotate, and then, the power is transmitted to the second planetary gear 3222 through the second sun gear 3221 and the second planetary gear 3222 of the secondary gear set 322, which are meshed with each other.. Since the second planetary gear 3222 of the secondary gear set 323 is meshed with the inner gear ring 325 to drive the second planetary rack 3223 to rotate, and then the second output shaft 327 of the second planetary rack 3223 located outside the speed-reducing mounting chamber 324 is driven to rotate, the second output shaft 327 is, as the output end of the planetary speed-reducing mechanism 320, connected to the second arm, and then drives the second arm to rotate relative to the first arm.

In the above embodiment, the inner gear ring 325 and the output end cover 326 are of an integrated structure. Such an arrangement is conducive to improving the stiffness of the inner gear ring 325, improving the torque transmission strength, and further improving the stability and reliability of the third mechanical joints 30 in actions. Meanwhile, the inner gear ring 325 and the output end cover 326 are of an integrated structure, which is conducive to mass production, simplifying assembly steps, and reducing the cost.

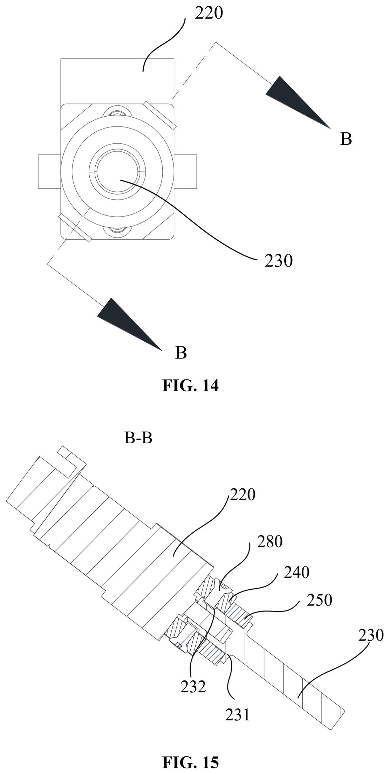

In some possible embodiments provided by the present application, the first arm is the connecting arm 70, both ends of the connecting arm 70 are connected to the output end of the planetary speed-reducing mechanism 320, and the second arm is the support arm 60 or the working arm 80. As shown in FIG. 14, a positioning structure is arranged on the first arm, a limit structure 3261 is arranged on a side of the output end cover 326 away from the motor base plate 312, and the limit structure 3261 matches the positioning structure to constrain the rotation of the output end cover 326 relative to the first arm. In other words, the matching between the limit structure and the positioning structure is utilized for rotational positioning and torque bearing, so as to improve the operational reliability and stability of the third mechanical joint 30.

Further, one of the positioning structure and the limit structure 3261 may be of a protrusion structure, and the other is of a groove structure. By matching the protrusion structure with the groove structure, the rotational positioning and torque bearing can be achieved. Specifically, the positioning structure may be a groove structure arranged on the first arm, and the limit structure 3261 may be a protrusion structure arranged on the output end cover 326. It can be understood that the groove structure may also be arranged on the output end cover 326, and the protrusion structure may be arranged on the first arm, also achieving a limiting function.

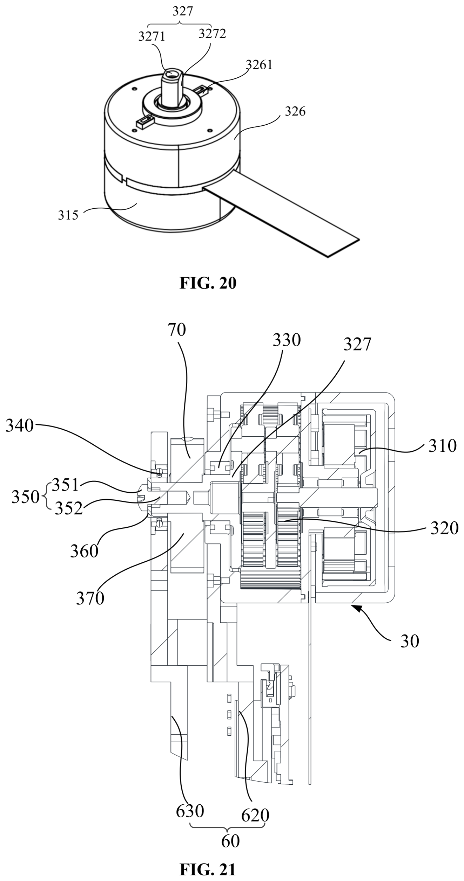

In some possible embodiments provided by the present application, as shown in FIG. 21, the third mechanical joint 30 further includes a first bearing 330, a flange bearing 340, a first connecting member 350 and a second pre-tightening spacer 360. The second output shaft 327 is sleeved with the first bearing 330, and the output end cover 326 is rotatably connected to the second output shaft 327 through the first bearing 330.

The first arm includes a first connecting part 620 and a second connecting part 630 which are arranged oppositely. A positioning structure is arranged on the first connecting part 620, that is, the first connecting part 620 is arranged adjacent to the output end cover 326, and limiting is achieved through the positioning structure and the limit structure 3261. The second connecting part 630 is located at a side of the first connecting part 620 away from the output end cover 326. The flange bearing 340 is connected to the second connecting part 630, that is, the flange bearing 340 is mounted on the second connecting part 630. For example, the flange bearing 340 is clamped into the second connecting part 630 from one side of the second connecting part 630 away from the first connecting part 620, and the second output shaft 327 is rotatably connected to the second connecting part 630 through the flange bearing 340. An end portion of the second output shaft 327 located outside the speed-reducing mounting chamber 324 is provided with a connecting hole 3271, and the first connecting member 350 can be connected to the connecting hole 3271. Along an axial direction of the second output shaft 327, the second pre-tightening spacer 360 is clamped between the first connecting member 350 and the second output shaft 327, and one side of the second pre-tightening spacer 360 facing the second output shaft 327 can be abutted against the flange bearing 340, that is, the flange bearing 340 and the second output shaft 327 are located on the same side of the second pre-tightening spacer 360.

After the second pre-tightening spacer 360 is clamped between the first connecting member 350 and the second output shaft 327, the second pre-tightening spacer 360 can be used as a baffle to constrain the motion of the flange bearing 340 relative to the second connecting part 630 along the axial direction of the second output shaft 327 toward a direction away from the second connecting part 630. Therefore, the flange bearing 340 can be reliably fixed on the second connecting part 630. Meanwhile, the second output shaft 327 can be fixed on the second connecting part 630, thereby being able to constrain the movement of the second output shaft 327 in the axial direction.

In other words, the third mechanical joint 30 provided in the embodiment of the present application adopts a simply supported beam-type connection. The first connecting part 620 of the first arm close to the side of the motor 310 matches the limit structure 3261 of the output end cover 326 through the positioning structure, such that the circumferential rotation of the motor 310 is limited. In addition, the first connecting part 620 is rotatably connected to the second output shaft 327 through the first bearing 330 of the speed-reducing motor 310, and the second connecting part 630 is rotatably connected to the second output shaft 327 by adopting the flange bearing 340. The second pre-tightening spacer 360 is clamped between the first connecting member 350 and the second output shaft 327 by using the connection of the first connecting member 350 to the connecting hole 3271 in the end portion of the second output shaft 327 away from the motor base plate 312. In addition, a side of the second pre-tightening spacer 360 facing the second output shaft 327 can be abutted against the flange bearing 340. This configuration, in conjunction with the structure of the flange baring 340 itself, enables mounting of the flange bearing 340 onto the second connecting part 630. Meanwhile, the movement of the second output shaft 327 in the axial direction can be limited, and the axial motion of the motor 310 can be further limited. Such an arrangement achieves a simple structure, is conducive to reducing the dimensions of the third mechanical joint 30, can meet the design requirements of the mechanical arm 001 for the compact structure and smaller dimensions, and expands the operational range of the mechanical joints.

Specifically, an outer edge of the flange bearing 340 is clamped in a mounting through hole of the second connecting part 630 and the second pre-tightening spacer 360 is abutted against the flange bearing 340. Thus, the flange bearing 340 can be limited on the second connecting part 630 along the axial direction of the second output shaft 327.

In the above embodiment, as shown in FIG. 21, the first connecting member 350 includes a head part 351 and a stem part 352. For example, the first connecting member 350 is a bolt, and the first connecting hole 3271 is a threaded hole. The stem part 352 is connected to the connecting hole 3271. Along the axial direction of the second output shaft 327, the second pre-tightening spacer 360 is located between the head part 351 and the end portion of the second output shaft 327, and then the second pre-tightening spacer 360 can be clamped between the end portion of the second output shaft 327 and the head part 351 of the first connecting member 350 by adjusting a connection length between the stem part 352 and the connecting hole 3271.

In a plane parallel to a radial direction of the second output shaft 327, a projection of the second pre-tightening spacer 360 has an overlap with a projection of the second output shaft 327, and the projection of the second pre-tightening spacer 360 has an overlap with a projection of the flange bearing 340, such that the same side of the second pre-tightening spacer 360 can be abutted against both the flange bearing 340 and the end portion of the second output shaft 327, the flange bearing 340 can then be limited on the second connecting part 630 along the axial direction of the second output shaft 327, the movement of the second output shaft 327 along the axial direction can be limited, and then the axial motion of the motor 310 can be limited.

In some possible embodiments provided by the present application, as shown in FIGs. 18, 19, 20, 21 and 22, the third mechanical joint 30 further includes a hoop 370 and a second connecting member 380. A first limit surface 3272 and a second limit surface are arranged on a circumferential side of the end portion of the second output shaft 327 that is located outside the speed-reducing mounting chamber 324, the first limit surface 3272 is configured to be in contact with the hoop 370, the second limit surface is configured to be in contact with the second arm, the second arm is located between the first connecting part 620 and the second connecting part 630, and the hoop 370 and the second arm are connected through the second connecting member 380. Therefore, the second output shaft 327 can be reliably connected to the second arm, and thus the second output shaft 327 rotates to drive the second arm to rotate, so as to rotate the second arm relative to the first arm, e.g., achieve a raising operation of the second arm relative to the first arm.

The arrangement of the first limit surface 3272 and the second limit surface is conducive to increasing a contact area between the second output shaft 327 and the hoop 370 as well as a contact area between the second output shaft 327 and the second arm, and plays a certain limiting role. Then, the second connecting member 380 is configured to connect the hoop 370 to an operating mechanism, such that the second arm can be reliably connected to the second output shaft 327.

Specifically, the second connecting member 380 may be a bolt, and the hoop 370 and the operating mechanism may be connected through the bolt.

In the above embodiment, the first limit surface 3272 and the second limit surface are arranged oppositely, and both are of planar structures. That is, the second output shaft 327 is a shaft with two opposing flat surfaces. The planar structures that are arranged oppositely facilitate machining and positioning, and can increase a contact area between the second output shaft 327 and the hoop 370 and a contact area between the second output shaft 327 and the operating mechanism and play a good positioning role, thereby being conducive to improving the reliability and stability of the connection between the second output shaft 327 and the operating mechanism.

Further, the third mechanical joint 30 further includes a third rotation angle detecting apparatus. The third rotation angle detecting apparatus is arranged on the second output shaft 327 of the third driving part, and configured to detect a rotation angle of the second output shaft 327. The third driving part also rotates or stops rotating according to a detection result of the third rotation angle detecting apparatus. Therefore, the second arm can be flexibly controlled to rotate relative to the first arm to any required angular position, so as to meet the requirements of different working conditions of the mechanical arm 001 and expand the operational range of the product. Specifically, the third rotation angle detecting apparatus may be a Hall sensor assembly.

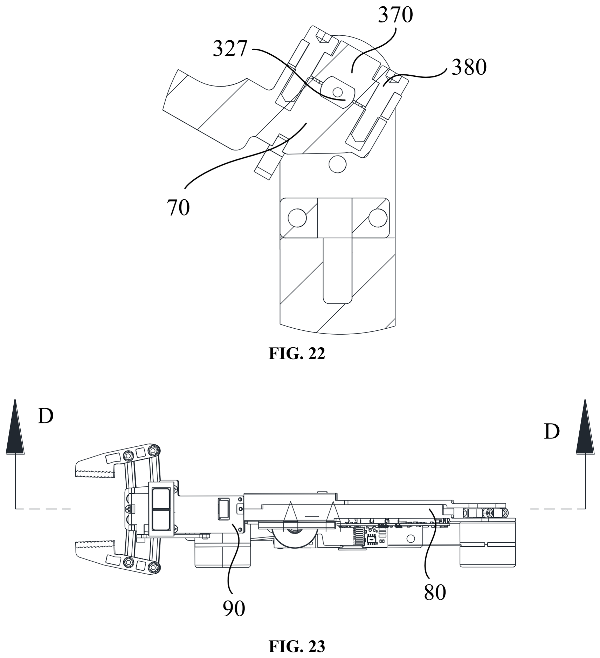

As shown in FIGs. 23, 24, 25, and 26, in some possible embodiments provided by the present application, the fourth mechanical joint 40 includes a fourth driving part 410, a photoelectric sensor 420 and a baffle 430. The fourth driving part 410 is arranged on the working arm 80 and connected to the mechanical hand 90 to drive the mechanical hand 90 to rotate, and one of the photoelectric sensor 420 and the baffle 430 is arranged on the mechanical hand 90 and the other is arranged on the working arm 80. The baffle 430 is configured to change a sensing result of the photoelectric sensor 420 when the mechanical hand 90 is in the zero position, that is, the photoelectric sensor 420 and the baffle 430 are arranged to determine the zero position of the mechanical hand 90.

For the fourth mechanical joint 40 provided by the embodiment of the present application, by adding the photoelectric sensor 420 and the baffle 430, when the mechanical hand 90 is in the zero position, the baffle 430 is configured to change the sensing result of the photoelectric sensor 420. Therefore, it can be determined that the mechanical hand 90 is in the zero position according to the change of the sensing result of the photoelectric sensor 420, such that the control system can further perform corresponding operations according to the mechanical hand 90 in the zero position, so as to improve the intelligence of the mechanical arm 001 and improve the user satisfaction in use. The zero position may be a position where the mechanical hand 90 is in the storage state relative to the working arm 80, or an initial position of relative rotation. For example, when the rotation angle of the mechanical hand 90 relative to the working arm is 0°, it can be referred that the mechanical hand 90 is in the zero position.

The photoelectric sensor 420 may be arranged on the mechanical hand 90, and the baffle 430 may be arranged on a frame of the fourth mechanical joint 40; or the photoelectric sensor 420 may be arranged on the frame of the fourth mechanical joint 40, and the baffle 430 may be arranged on the mechanical hand 90 to meet the requirements of different structures of the photoelectric sensor 420 and the baffle 430. The frame of the mechanical joint may be the working arm 80, a housing 411 of the fourth driving part 410, etc.

In the above embodiment, the fourth driving part 410 is connected to the photoelectric sensor 420, and the fourth driving part 410 is configured to rotate or stop rotating according to the sensing result of the photoelectric sensor 420. Thus, the working state of the fourth driving part 410 can be reasonably controlled according to the sensing result of the photoelectric sensor 420, and then the position of the mechanical hand 90 is reasonably controlled. Thus, the mechanical hand 90 is in different positions to meet the different working condition requirements of the mechanical hand 90, thereby expanding the operational range of the product.

Specifically, when the sensing result of the photoelectric sensor 420 is changed, it is possible that the mechanical hand 90 is in the zero position, that is, the mechanical hand 90 is in the storage position, such that the fourth driving part 410 stops rotating according to the sensing result of the photoelectric sensor 420. Thus, the mechanical hand 90 stops rotating and remains in the zero position, which is convenient for storage and avoids the situation that the mechanical hand 90 continues rotating to cause energy waste and inconvenience in storage due to continuous working of the fourth driving part 410.

It can be understood that when the sensing result of the photoelectric sensor 420 is not changed, it is possible that the mechanical hand 90 is in the rotating state or zero state, and the fourth driving part 410 continues to remain the current rotating or rotation stopping state according to the sensing result of the photoelectric sensor 420, that is, the mechanical hand 90 can be remained in the current state.

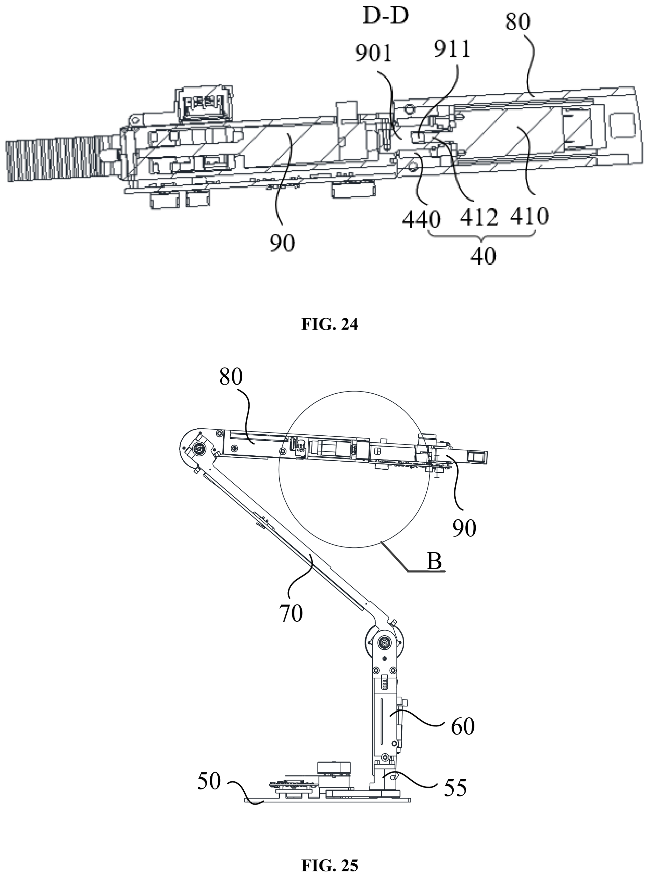

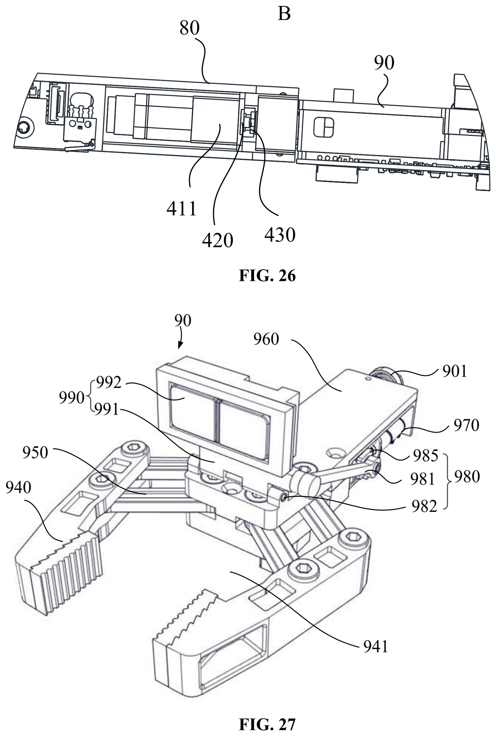

In some possible embodiments provided by the present application, as shown in FIGs. 24 and 26, the fourth driving part 410 includes the fourth housing 411 and a fourth output shaft 412. For example, the fourth driving part is a motor, the fourth housing 411 of the fourth driving part is connected to the working arm 80. That is, the fourth housing 411 of the fourth driving part 410 is mounted on the working arm 80, and the photoelectric sensor 420 is arranged on the working arm 80 or the housing 411. In other words, the photoelectric sensor 420 is arranged on a fixed mechanism. The mechanical hand 90 includes a connecting shaft 901 connected to the fourth output shaft 412, and the baffle 430 is arranged on the connecting shaft 901, that is, the baffle 430 rotates as the rotation of the connecting shaft 901.

When the mechanical hand 90 is in the zero position, the baffle 430 is configured to prevent the photoelectric sensor 420 from receiving optical signals, such that the sensing result of the photoelectric sensor 420 will be changed, thereby achieving a simple structure, easy implementation and making it suitable for popularization and application.

In some possible embodiments provided by the present application, as shown in FIG. 24, the fourth mechanical joint 40 further includes a bearing apparatus 440, and one end of the working arm 80 facing the mechanical hand 90 is provided with a mounting hole 810 and a mounting groove 820 communicated with the mounting hole 810 and located on a side of the mounting hole 810 away from the mechanical hand 90. The fourth driving part 410 is located in the mounting groove 820, the connecting shaft 901 penetrates through the mounting hole 810, the bearing apparatus 440 is located in the mounting hole 810, and the working arm 80 and the connecting shaft 901 are connected through the bearing apparatus 440.

Since the fourth driving part 410 is located in the mounting groove 820, the size of the working arm 80 will not increase due to the arrangement of the fourth driving part 410, which can meet the design requirements of the fourth mechanical joint 40 for the compact structure and smaller dimensions and expand the operational range.

The bearing apparatus 440 is located in the mounting hole 810 of the working arm 80, and the working arm 80 and the connecting shaft 901 are connected through the bearing apparatus 440, such that the connecting shaft 901 can be supported through the bearing apparatus 440. The connecting shaft 901 is connected to the fourth output shaft 412 of the fourth driving part 410, such that the fourth driving part 410 can further drive the working arm 80 to rotate. Further, the bearing apparatus 440 is a ball bearing or a sliding bearing.

In the above embodiment, as shown in FIG. 24, the end portion of the connecting shaft 901 is provided with a limit hole 911, and the fourth output shaft 412 is inserted into the limit hole 911 to be connected to the connecting shaft 901. The arranged limit hole 911 achieves a better limiting function and can limit the rotation of the connecting shaft 901 relative to the fourth output shaft 412, such that the rotation of the fourth output shaft 412 can drive the connecting shaft 901 to rotate, and then drive the mechanical hand 90 to rotate.

Specifically, the limit hole 911 is a D-shaped hole and the D-shaped hole provides a planar constraint between the connecting shaft 901 and the fourth output shaft 412, and achieves a function similar to that of a key, such that the rotation of the fourth output shaft 412 can drive the connecting shaft 901 to rotate. In addition, the D-shaped hole is convenient to machine and assemble.

In some possible embodiments provided by the present application, the fourth mechanical joint 40 further includes a fourth rotation angle detecting apparatus. The fourth rotation angle detecting apparatus is arranged on the fourth driving part 410 and configured to detect a rotation angle of the fourth output shaft 412, and the fourth driving part 410 also rotates or stops rotating according to the detection result of the rotation angle detecting apparatus. Therefore, according to the rotation angle of the fourth output shaft 412 detected by the rotation angle detecting apparatus, the working state of the fourth driving part 410 is reasonably controlled. Thus, the mechanical hand 90 rotates to a proper position to meet the requirements of different working conditions of the mechanical hand 90. Specifically, the fourth rotation angle detecting apparatus is a Hall sensor.

As shown in FIGs. 27 to 34, in some possible embodiments provided by the present application, the mechanical hand 90 includes a base seat 960, a fifth driving part 910, a second screw rod 920, a second guiding nut 930, two clamping parts 940 and two connecting rod mechanisms 950. The base seat 960 is connected to the fourth mechanical joint 40. The fifth driving part 910 is connected to the base seat 960. The second screw rod 920 is in threaded connection with the second guiding nut 930 and connected to the fifth driving part 910. The second guiding nut 930 is provided with a cylindrical boss 931, a first end of each connecting rod mechanism 950 is movably connected to the cylindrical boss 931, and a second end of each connecting rod mechanism 950 is hinged to the corresponding clamping part 940. The fifth driving part 910 drives the second screw rod 920 to rotate, such that the second guiding nut 930 moves relative to the second screw rod 920 to drive the two connecting rod mechanisms 950 to rotate, which further drives the two clamping parts 940 to move close to or away from each other.

As shown in FIGs. 27, 28 and 29, for the mechanical hand 90 provided by the embodiment of the present application, the cylindrical boss 931 is arranged on the second guiding nut 950, and the cylindrical boss 931 is movably connected to the first ends of the two connecting rod mechanisms 950. In this way, in the process in which the fifth driving part 910 drives the second screw rod 920 to rotate, the second guiding nut 930 will drive the first end of each connecting rod mechanism 950 to move synchronously relative to the second screw rod 920. Therefore, the two connecting rod mechanisms 950 will be driven to rotate to move close to or away from each other, and then the two clamping parts 940 connected to the second ends of the two connecting rod mechanisms 950 will be driven to move close to or away from each other, so as to achieve the grasping or releasing operation of the mechanical hand 90. Thus, by using the second guiding nut 930 and the second screw rod 920, which are in threaded connection, in cooperation with the fifth driving part 910 and the two connecting rod mechanisms 950, the two clamping parts 940 can move close to or away from each other, so as to achieve the grasping or releasing operation of the mechanical hand 90, thereby achieving a simple structure and a lower cost.

The cylindrical boss 931 is arranged on the second guiding nut 930, that is, the cylindrical boss 931 and the second guiding nut 930 may be integrally formed. Due to such an arrangement, the arrangement of the connecting structure between the second guiding nut 930 and the connecting rod mechanisms 950 is simplified, which can meet the design requirements of the mechanical hand 90 for the compact structure and smaller dimensions and is conductive to expanding the operational range of the mechanical hand 90. Thus, the mechanical hand 90 can meet the design requirements of the self-moving cleaning device for the compact structure and smaller dimensions.

In some possible embodiments provided by the present application, the cylindrical boss(es) 931 is/are distributed on one side or both sides of the second guiding nut 930 in a first direction, and the direction in which the two clamping parts 940 move close to or away from each other is perpendicular to the first direction.

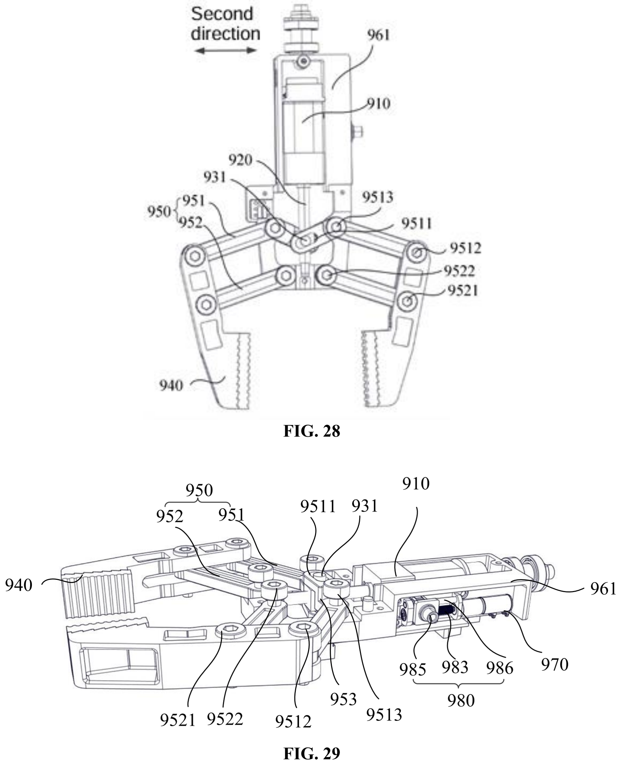

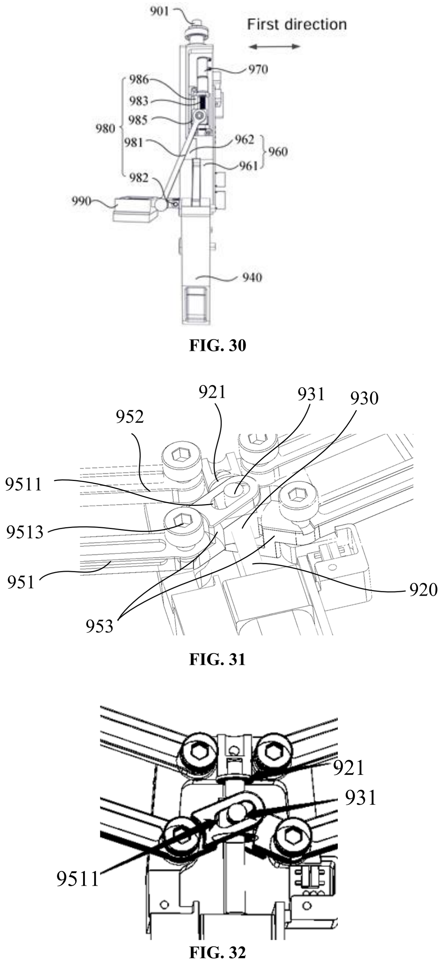

The direction in which the two clamping parts 940 move close to or away from each other may be the second direction, and the first direction is perpendicular to the second direction. For example, the first direction may be the vertical direction and the second direction may be the horizontal direction. The first direction and the second direction may be as shown in FIGs. 30 and 28.

In the present embodiment, when the cylindrical boss 931 is distributed on one side of the second guiding nut 930 in the first direction, the first ends of the two connecting rod mechanisms 950 are both movably connected to the cylindrical boss 931; and when the cylindrical bosses 931 are distributed on both sides of the second guiding nut 930 in the first direction, the first ends of the two connecting rod mechanisms 950 are movably connected to the corresponding cylindrical bosses 931, respectively, that is, the two connecting rod mechanisms 950 are movably connected to the corresponding cylindrical bosses 931 respectively from two sides of the second guiding nut 930. The cylindrical boss(es) 931 is/are distributed on one side or both sides of the second guiding nut 930 in the first direction. Due to such an arrangement, the two connecting rod mechanisms 950 and the second guiding nut 930 are stacked together in the first direction. Compared with the mechanical hand in the related art in which the two connecting rod mechanisms 950 are movably connected to the second guiding nut 930 in the second direction, this arrangement satisfies the design requirement for the compact structure. Under the condition that the structural sizes of all components are unchanged, the overall size of the mechanical hand 90 in the second direction can be reduced, the design requirements of the mechanical hand 90 for the compact structure and smaller dimensions can be further met under the condition that the mechanical hand 90 has sufficient strength, thereby expanding the operational range of the mechanical hand 90 and making it suitable for popularization and application.

The second guiding nut 930 is provided with the cylindrical boss(es) 931 on one side or two opposite sides in the first direction, and the connecting rod mechanisms 950 are hinged to the cylindrical boss 931, which can ensure that the connecting rod mechanisms 950 have a sufficient movement range and rotate flexibly and smoothly relative to the nut. In addition, the cylindrical boss 931 is easy to machine and implement.

In some possible embodiments provided by the present application, as shown in FIGs. 28, 29 and 30, the connecting rod mechanism 950 includes a first rod 951. A first end of the first rod 951 is provided with a sliding slot 9511, and the cylindrical boss 931 is located in the sliding slot 9511 and can move in the sliding slot 9511 with the movement of the second guiding nut 930. A second end of the first rod 951 is hinged to the clamping part 940 through a first hinge point 9512 to drive the clamping part 940 to move. A portion of the first rod 951 between the first end and the second end is hinged to the base seat 960 through a second hinge point 9513. Thus, when the fifth driving part 910 drives the second screw rod 920 to rotate, the second guiding nut 930 moves relative to the second screw rod 920, and the first ends of the two first rods 951 can be driven to move through the cooperation of the cylindrical bosses 931 and the sliding slots 9511. Thus, through the two first rods 951, the two connecting rod mechanisms 950 correspondingly connected to the second ends of the first rods 951 can be driven to be closed or opened in a scissor-like manner, thereby achieving clamping and unloading functions of the clamping parts 940.

Geometric centers of the first hinge point 9512, the second hinge point 9513 and the sliding slot 9511 may not be collinear, or the geometric centers of the first hinge point 9512, the second hinge point 9513 and the sliding slot 9511 may also be collinear.

In the above embodiment, as shown in FIGs. 28 and 29, the connecting rod mechanism 950 further includes a second rod 952. A first end of the second rod 952 is hinged to the clamping part 940 through a third hinge point 9521, and a second end of the second rod 952 is hinged to the base seat 960 through a fourth hinge point 9522. A figure formed by the first hinge point 9512, the second hinge point 9513, the third hinge point 9521 and the fourth hinge point 9522 is a parallelogram. That is, the connecting rod mechanism 950 is a parallel four-connecting-rod mechanism. The parallel four-connecting-rod mechanism has a simple structure and good dynamic balance, which can be further conductive to improving the operational stability and reliability of the mechanical hand 90.

Specifically, the fifth driving part 910 is a motor, the fifth driving part 910 is mounted on the base seat 960, and the base seat 960 and the fifth driving part 910 remain relatively stationary. A fifth output shaft of the fifth driving part 910 is connected to the second screw rod 920, and the fifth driving part 910 drives the second screw rod 920 to rotate, such that the second guiding nut 930 in threaded connection with the second screw rod 920 can move along the second screw rod 920. For example, if the fifth output shaft of the fifth driving part 910 drives the second screw rod 920 to rotate in a forward direction, the second guiding nut 930 can move forward along the second screw rod 920, otherwise, if the fifth output shaft of the fifth driving part 910 drives the second screw rod 920 to rotate in a backward direction, the second guiding nut 930 can move backward along the second screw rod 920.

Since the cylindrical boss 931 of the second guiding nut 930 can move along the sliding slot 9511 in the first rod 951 of the connecting rod mechanism 950, the second guiding nut 930 can exert a force on the connecting rod mechanism 950 through the first rod 951 during moving along the second screw rod 920. Since the first rod 951 is hinged to the clamping part 940 through the first hinge point 9512 and hinged to the base seat 960 through the second hinge point 9513, the second rod 952 is hinged to the clamping part 940 through the third hinge point 9521 and hinged to the base seat 960 through the fourth hinge point 9522. The connecting rod mechanism 950 is a parallel four-connecting-rod mechanism. The second guiding nut 930 moves front and back along the second screw rod 920. Through the first rods 951, the two connecting rod mechanisms 950 can be driven to be closed or opened in a scissor-like manner, thereby achieving the clamping and unloading functions of the clamping parts 940.

In the above embodiment, as shown in FIGs. 29 and 31, the first rod 951 is provided with a bent structure 953. The bent structure 953 is located between the second hinge point 9513 and the sliding slot 9511, and the bent structures 953 of the two connecting rod mechanisms 950 are bent in a direction away from each other. With such an arrangement, in the first direction, the distance between the sliding slots 9511 of the two first rods 951 is greater than the distance between the second hinge points 9513 of the two first rods 951. Therefore, after the two first rods 951 and the second guiding nut 930 are stacked together, the distance between the second hinge points 9513 of the two first rods 951 is smaller in the first direction, such that the structure of the mechanical hand 90 is compact, the overall size of the mechanical hand 90 in the first direction is reduced, and the design requirements of the mechanical hand 90 for the compact structure and smaller dimensions can be met.

Specifically, as shown in FIG. 31, two cylindrical bosses 931 are distributed on both sides of the second guiding nut 930 in the first direction, the bent structure 953 of the first rod 951 above the second guiding nut 930 is upward and the bent structure 953 of the first rod 951 below the second guiding nut 930 is downward. Therefore, after the two first rods 951 are hinged to the cylindrical bosses 931 of the second guiding nut 930 through the sliding slots 9511, the two first rods 951 are stacked together with the second guiding nut 930 in opposite vertical directions, thereby reducing a height difference between the portions of the two first rods 951 away from the bent structures 953 in the first direction. Thus, the height difference between the second hinge points 9513 of the two first rods 951 in the first direction is smaller or the second hinge points 9513 of the two first rods 951 are parallel in the first direction, thereby achieving a compact structure of the mechanical hand 90. In addition, this arrangement ensures balanced force distribution between the two clamping parts 940 and thus enables the stable clamping.

In some possible embodiments provided by the present application, as shown in FIGs. 31 and 32, the mechanical hand 90 further includes a thrust spacer 921. A sliding hole for insertion of the end of the second screw rod 920 away from the fifth driving part 910 is arranged in the base seat 960. A stepped part located outside the sliding hole is arranged on a circumferential side of the second screw rod 920. The thrust spacer 921 is located between the end surface of the sliding hole and the stepped part.

The axial force of the second screw rod 920 can be loaded on the thrust spacer 921 when the mechanical hand 90 acts to enable the two clamping parts 940 to approach each other to clamp an object, or when the mechanical hand 90 acts to enable the two clamping parts 940 to approach each other to the extreme positions. At this time, the fifth driving part 910 does not bear the axial force, thereby protecting the fifth driving part 910 well and avoiding the problem that the second screw rod 920 is damaged since the two clamping parts 940 continue approaching each other after reaching the extreme positions, which is conductive to prolonging the service life of the fifth driving part 910 and improving the reliability of the mechanical hand 90.

In some possible embodiments provided by the present application, as shown in FIG. 30, the base seat 960 includes a first cover plate 961 and a second cover plate 962 which are distributed in the first direction. A portion of the first cover plate 961 and a portion of the second cover plate 962 are connected with each other, enclosing and forming a chamber for accommodating the fifth driving part 910. A clearance is arranged between the other portions of the first cover plate 961 and the second cover plate 962. The second guiding nut 930 and a portion of the connecting rod mechanisms 950 are located in the clearance.

That is, the fifth driving part 910 is mounted in the chamber enclosed by the first cover plate 961 and the second cover plate 962, such that the first cover plate 961 and the second cover plate 962 protect the fifth driving part 910 well. The second guiding nut 930 and the portion of the connecting rod mechanisms 950 are located in the clearance between the first cover plate 961 and the second cover plate 962. Thus, the first cover plate 961 and the second cover plate 962 protect the second guiding nut 930 and the portion of the connecting rod mechanisms 950 well. This is conductive to improving the reliability of the mechanical hand 90. Meanwhile, it is conductive to improving the aesthetic appeal and neatness of the appearance of the mechanical hand 90. Besides, the clearance between the first cover plate 961 and the second cover plate 962 provides a sufficient movement space for the second guiding nut 930 and the portion of the connecting rod mechanisms 950.

Specifically, the first cover plate 961 and the second cover plate 962 may be detachably connected by means of bolts, clamping and the like, so as to facilitate the maintenance of the second guiding nut 930 and the connecting rod mechanisms 950 between the two cover plates, thereby achieving convenient operation.

In some possible embodiments provided by the present application, as shown in FIGs. 27, 29 and 30, the mechanical hand 90 further includes a sixth driving part 970, a transmission mechanism 980 and a first imaging apparatus 990. The sixth driving part 970 is arranged on the base seat 960. The transmission mechanism 980 is connected to the sixth driving part 970 and the first imaging apparatus 990. The sixth driving part 970 is configured to drive the transmission mechanism 980 to drive the first imaging apparatus 990 to rotate relative to the base seat 960.

The mechanical hand 90 provided by the embodiment of the present application is additionally provided with the first imaging apparatus 990, such that while the mechanical hand 90 retains its original object-clamping function, an image of an environment nearby the mechanical hand 90 can be collected using the first imaging apparatus 990, thereby achieving functional diversification of the mechanical hand 90 and making it suitable for popularization and application.

Further, the sixth driving part 970 can drive the first imaging apparatus 990 to rotate relative to the base seat 960 through the transmission mechanism 980, which can further change a shooting angle of the first imaging apparatus 990, so as to increase a collection range of the first imaging apparatus 990 and expand the operational range of the mechanical hand 90. Meanwhile, the first imaging apparatus 990 can be placed in a reasonable position to avoid obstacles and protect a camera 992, which is conductive to reducing a failure rate of the first imaging apparatus 990 and improving the reliability of the product.

Further, the sixth driving part 970 drives the transmission mechanism 980 to drive the first imaging apparatus 990 to rotate relative to the base seat 960, which solves the problem of manually adjusting the shooting angle of the first imaging apparatus 990 and improves the intelligence of the mechanical hand 90.

In the above embodiment, one end of the first imaging apparatus 990 is rotatably connected to the base seat 960 through a second rotatable shaft 982. The transmission mechanism 980 includes a third screw rod 983, a third guiding nut 984 and a connecting rod 981. The third screw rod 983 is in threaded connection with the third guiding nut 984 and connected to the sixth driving part 970. A first end of the connecting rod 981 is hinged to the third guiding nut 984, and a second end of the connecting rod 981 is hinged to a portion of the first imaging apparatus 990 away from the second rotatable shaft 982. Thus, when the sixth driving part 970 drives the third screw rod 983 to rotate, the third guiding nut 984 moves relative to the third screw rod 983, such that the first imaging apparatus 990 is driven to roll around the second rotatable shaft 982 through the connecting rod 981, so as to achieve the rotation of the first imaging apparatus 990 relative to the base seat 960. The sixth driving part 970 may be a motor, and the motor can drive the third screw rod 983 to rotate in the forward direction or backward direction, so as to achieve the rolling of the first imaging apparatus 990 in the forward direction or backward direction relative to the base seat 960. Specifically, through the cooperation of the sixth driving part 970, the third screw rod 983, the third guiding nut 984, the connecting rod 981 and the second rotatable shaft 982, the first imaging apparatus 990 can be driven to rotate relative to the base seat 960, thereby achieving a simple structure, convenient operation and smaller dimensions, and being able to meet the design requirement of the mechanical hand 90 for the compact structure.

Specifically, the first imaging apparatus 990 includes an imaging bracket 991 and the camera 992. The imaging bracket 991 is connected to the base seat 960 through the second rotatable shaft 982. The imaging bracket 991 is hinged to the connecting rod 981, and the camera 992 is mounted on the imaging bracket 991. Thus, when the sixth driving part 970 drives the imaging bracket 991 to roll relative to the base seat 960 through the transmission mechanism 980, the camera 992 rotates relative to the base seat 960, and different shooting angles can be further achieved.

Further, the maximum rolling angle of the first imaging apparatus 990 may be 180°. That is, the first imaging apparatus can be rolled by any angle within the range from 0 to 180° relative to the base seat 960. It can be understood that the maximum rolling angle of the imaging apparatus may also be 200°, 270°, 300° or other angle values.

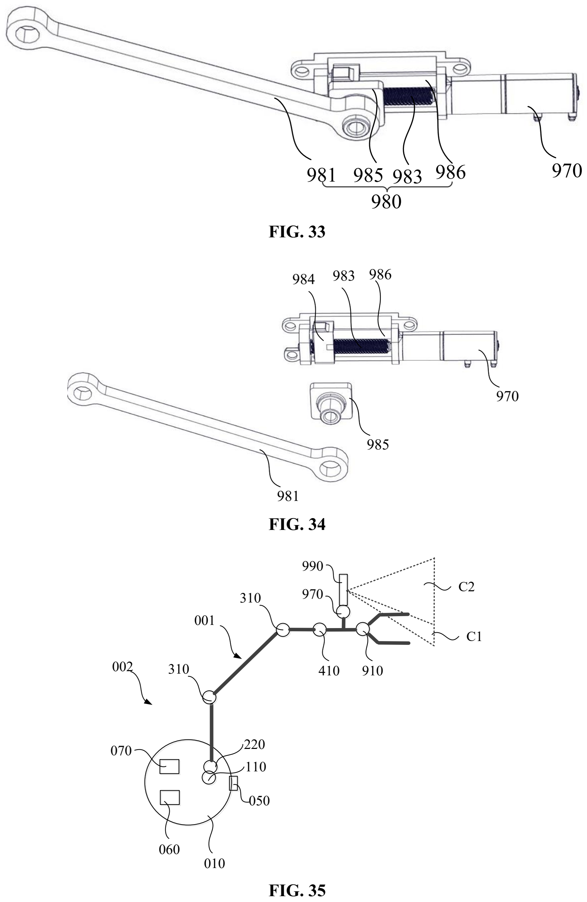

As shown in FIGs. 33 and 34, in some possible embodiments provided by the present application, the transmission mechanism 980 further includes a connecting block 985, and the connecting block 985 is fixedly connected to the third guiding nut 984 and hinged to the connecting rod 981. By providing the connecting block 985, the connecting rod 981 may be conveniently and reliably hinged to the third guiding nut 984.

One side of the connecting block 985 may be fixed to the third guiding nut 984 by means of welding, or the connecting block 985 may be fixed to the third guiding nut 984 by means of a bolt structure, clamping, etc. A side of the connecting block 985 away from the third guiding nut 984 may be provided with a circular boss. A first end of the connecting rod 981 may sleeve the circular boss through a circular hole to achieve a hinging connection between the connecting rod 981 and the connecting block 985.

As shown in FIGs. 29, 30, 33 and 34, the transmission mechanism 980 further includes a slider 986. The slider 986 is arranged parallel to the third screw rod 983 and fixed to the base seat 960. The slider 986 penetrates through the third guiding nut 984 and is configured to constrain the movement of the third guiding nut 984.

In other words, the third guiding nut 984 is provided with a threaded hole and a through hole. The third guiding nut 984 is in threaded connection with the third screw rod 983 through the threaded hole and may move along the third screw rod 983 when the third screw rod 983 is rotating. The third guiding nut 984 is slidably connected to the slider 986 through the through hole, such that during the movement of the third guiding nut 984 along the third screw rod 983, within the constraints of the through hole and the slider 986, the third guiding nut 984 may also slide along the slider 986. Therefore, the arrangement of the slider 986 can improve the precision and accuracy of the movement of the third guiding nut 984 along the third screw rod 983 and reduce shaking of the third guiding nut 984 during the movement, thereby improving the stability and accuracy of rolling of the first imaging apparatus 990 relative to the base seat 960 and being conductive to ensuring the shooting quality of the first imaging apparatus 990.

In some possible embodiments provided by the present application, an avoidance space 941 is formed between the two clamping parts 940, and the first imaging apparatus 990 can roll relative to the base seat 960 to be above the avoidance space 941. Therefore, when the first imaging apparatus 990 rolls relative to the base seat 960 to be above the avoidance space 941, if the camera 992 of the first imaging apparatus 990 faces the avoidance space 941, the first imaging apparatus 990 can collect an image from a perspective below the avoidance space 941 through the avoidance space 941, which further expands the collection range of the imaging apparatus.

As shown in FIGs. 35 to 42, in some embodiments provided by the present application, a structure of another mechanical hand 90' is also provided. It can be understood that the mechanical hand 90' provided by the present embodiment may still be connected to the fourth output shaft 412 of the fourth mechanical joint through a connecting shaft 901', and the specific mode of connection is the same as that of the mechanical hand 90 shown in FIGs. 27 to 34, and thus will not be explained in detail here.

As shown in FIGs. 35 to 42, the mechanical hand 90' provided by the embodiment of the present application includes a base seat 960', the base seat 960' being provided with a holding groove 963' with an upward opening; a main driving part 910' and two clamping parts 940', which are arranged on the base seat 960' and located outside the holding groove 963', the main driving part 910' being in transmission connection with the two clamping parts 940' to drive the two clamping parts 940' to move close to or away from each other; and an auxiliary driving part 970' and a first imaging apparatus 990', the auxiliary driving part 970' being arranged inside the holding groove 963', and the auxiliary driving part 970' being in transmission connection with the first imaging apparatus 990' to drive the first imaging apparatus 990' to roll to be accommodated inside the holding groove 963' or to be located outside the holding groove 963'.

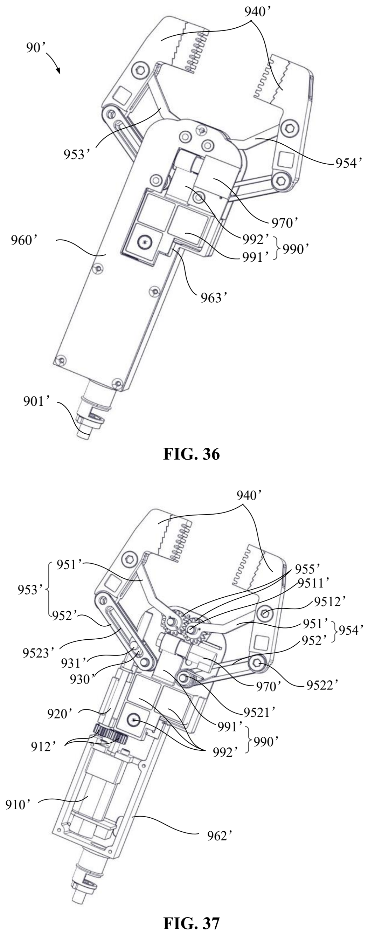

As shown in FIGs. 36, 40 and 41, for the mechanical hand 90' provided by the embodiment of the present application, the main driving part 910' drives the two clamping parts 940' to move close to or away from each other, so as to achieve a grabbing or releasing operation of the mechanical hand 90'. Meanwhile, the first imaging apparatus 990' is added, such that when the mechanical hand 90' retains its original object-clamping function, an environment or object near the mechanical hand 90' can be detected by using the first imaging apparatus 990'. For example, the first imaging apparatus 990' may achieve ranging or mapping, or identify the object and a color, thereby achieving functional diversification of the mechanical hand 90' and making it suitable for popularization and application.

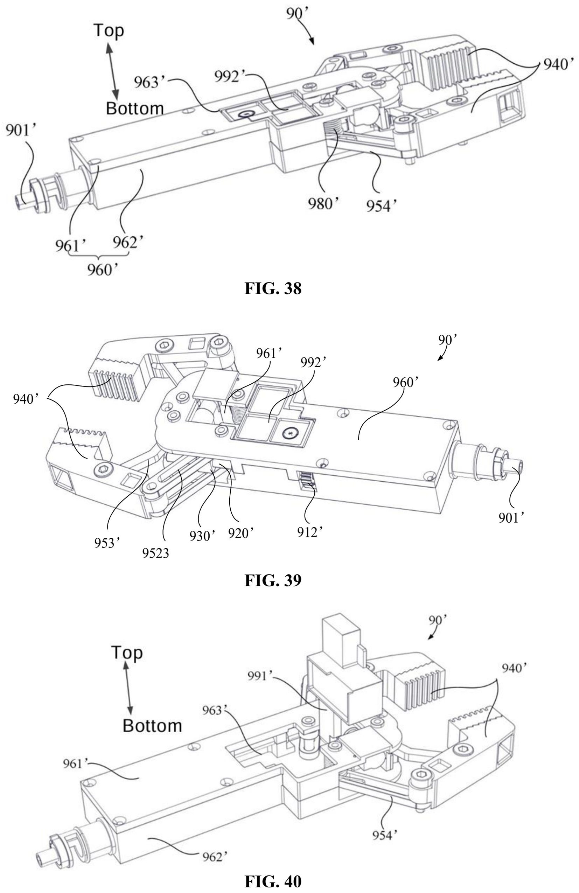

Further, the auxiliary driving part 970' is in transmission connection with the first imaging apparatus 990' to drive the first imaging apparatus 990' to roll, which can further change a shooting angle of the first imaging apparatus 990' to enlarge the detection range of the first imaging apparatus 990' and expand the operational range of the mechanical hand 90'. Meanwhile, the base seat 960' of the mechanical hand 90' is provided with the holding groove 963', and under the drive of the auxiliary driving part 970', the first imaging apparatus 990' can roll to be accommodated inside the holding groove 963' or to be located outside the holding groove 963' to meet the requirements of the first imaging apparatus 990' for different shooting angles. Meanwhile, compared with the related art in which the first imaging apparatus is connected to an outer wall of the mechanical hand, such an arrangement is conductive to reducing the overall size of the mechanical hand in a thickness direction, and can meet the design requirement of the mechanical hand 90' for a compact structure. The directions of the mechanical hand 90' at the top and the bottom are shown by arrows in FIGs. 38 and 40, and the thickness direction of the mechanical hand 90' is a direction from the top to the bottom of the mechanical hand 90'.

Further, the auxiliary driving part 970' drives the first imaging apparatus 990' to roll relative to the base seat 960', which solves the problem of manually adjusting the shooting angle of the first imaging apparatus 990' and improves the intelligence of the mechanical hand 90'.

It can be understood that the base seat 960' may be connected to the working arm 80 of the mechanical arm 001. Specifically, the base seat 960' is rotatably connected to the working arm 80 through the fourth mechanical joint 40, and the specific structure of the fourth mechanical joint 40 will be described in detail later.

In some possible embodiments provided by the present application, the first imaging apparatus 990' includes a camera 992'. The camera 992' includes a ToF camera and an RGB camera, and the ToF camera includes a transmitting end and a receiving end. The ToF camera may be used for ranging or mapping alone, or establishing a 3D map model in cooperation with an LDS or other optical modeling sensors of the self-moving cleaning device. The RGB camera may be configured to identify an object and a color.

Further, as shown in FIGs. 36, 37, 38 and 39, the first imaging apparatus 990' includes a first extreme position accommodated inside the holding groove 963'. At the first extreme position, the top of the first imaging apparatus 990' is lower than an upper surface of the base seat 960', and the camera 992' faces upward.

The first extreme position can be understood as an initial position of the first imaging apparatus 990', for example, a zero position of the first imaging apparatus 990'. When the first imaging apparatus 990' is at the first extreme position, the first imaging apparatus 990' is accommodated inside the holding groove 963', and the upper surface of the base seat 960' protrudes from the top of the first imaging apparatus 990'. With this arrangement, the base seat 960' well protects the first imaging apparatus 990', avoiding the problem that an obstacle scratches the first imaging apparatus 990'. This is conductive to protecting the camera 992', reducing the failure rate of the first imaging apparatus 990' and improving the product reliability. Meanwhile, the camera 992' faces upward when the first imaging apparatus 990' is at the first extreme position, such that when the mechanical arm 001 is accommodated inside the holding chamber 011, the camera 992' can map an upward area, and establish a 3D map model in cooperation with the LDS or other optical modeling sensors of the self-moving cleaning device, thereby being conductive to improving the reliability of mapping by the self-moving cleaning device and simplifying the arrangement of the sensors of the self-moving cleaning device to a certain extent.

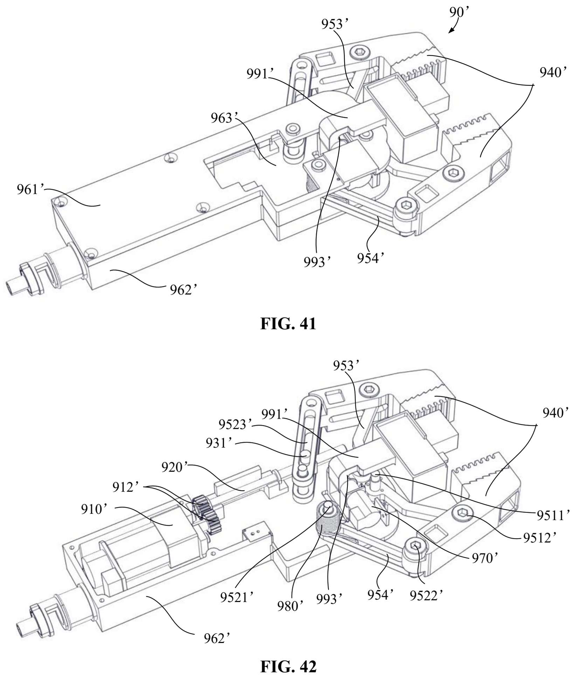

Further, as shown in FIGs. 41 and 42, the first imaging apparatus 990' includes a second extreme position between the two clamping parts 940' moving away from each other, and the camera 992' of the first imaging apparatus 990' faces downward at the second extreme position.

The second extreme position can be understood as a maximum rolling position of the first imaging apparatus 990'. When the first imaging apparatus 990' rolls to the second extreme position, the first imaging apparatus 990' is located between the two clamping parts 940' under the condition that the two clamping parts 940' are separated, such that the first imaging apparatus 990' reasonably utilizes a space formed by separating the two clamping parts 940' to achieve a storage function, which is conductive to reducing the space occupied by the mechanical hand 90' as a whole and facilitates storage. In addition, the first imaging apparatus 990' is well protected from two sides by using the two clamping parts 940', such that the obstacle is prevented from hitting the first imaging apparatus 990' from side surfaces, which is conductive to prolonging the service life of the first imaging apparatus 990'. Meanwhile, the camera 992' faces downward when the first imaging apparatus 990' is at the second extreme position. Therefore, dust deposition on the camera 992' can be avoided when the mechanical arm 001 is accommodated inside the holding chamber 011, which is conductive to improving the cleanliness of the camera 992' and further conductive to improving the accuracy of information collection by the first imaging apparatus 990'.

Specifically, a rolling angle of the first imaging apparatus 990' may be 180°, which can provide a larger viewing angle for the mechanical arm.

As shown in FIGs. 36, 37, 38 and 42, in some possible embodiments provided by the present application, the first imaging apparatus 990' further includes an imaging bracket 991'. The camera 992' is mounted on the imaging bracket 991', an end portion of the imaging bracket 991' away from the camera 992' is connected to an output shaft of the auxiliary driving part 970', and the auxiliary driving part 970' rotates to drive the imaging bracket 991' to roll.

In the present embodiment, the auxiliary driving part 970' may be a motor, and the imaging bracket 991' is connected to the output shaft of the auxiliary driving part 970'. For example, one end of the imaging bracket 991' sleeves the output shaft of the auxiliary driving part 970', such that the output shaft of the auxiliary driving part rotates to drive the imaging bracket 991' to roll relative to the base seat 960'. Since the camera 992' is mounted on the imaging bracket 991, the camera 992' can roll relative to the base seat 960' so as to achieve a rolling operation of the first imaging apparatus 990', achieving a simple structure, smaller dimensions and a lower cost.

As shown in FIGs. 41 and 42, a portion of the imaging bracket 991' between the camera 992' and the auxiliary driving part 970' is also provided with an avoidance bend 993'. The avoidance bend 993' is configured to avoid the base seat 960' when the first imaging apparatus 990' is at the second extreme position. In other words, when the auxiliary driving part 970' acts to roll the first imaging apparatus 990' from the first extreme position to the second extreme position, the camera 992' rolls from the inside of the holding groove 963' to the outside of the holding groove 963' and is located between the two clamping parts 940' which are separated from each other, that is, the camera 992' rolls by 180°. In addition, the arrangement of the avoidance bend 993' enables the imaging bracket 991' to avoid the side wall of the holding groove 963', such that the imaging bracket 991' is prevented from interfering with the side wall of the holding groove 963' to ensure unimpeded range of rotation of the imaging bracket 991', which ensures that the first imaging apparatus 990' can successfully roll to the second extreme position and that the top of the first imaging apparatus 990' is lower than the upper surface of the holding groove 963' when the first imaging apparatus 990' is at the first extreme position.

As shown in FIGs. 36, 37 and 41, in some possible embodiments provided by the present application, the mechanical hand 90' further includes a first connecting rod mechanism 953' and a second connecting rod mechanism 954' distributed on two outer sides of the holding groove 963' respectively, and the first connecting rod mechanism 953' and the second connecting rod mechanism 954' are in transmission connection through a main gear set 955' and are both hinged to the base seat 960' and the corresponding clamping parts 940'. In other words, the first connecting rod mechanism 953' is hinged to the base seat 960' and one of the clamping parts 940', the second connecting rod mechanism 954' is hinged to the base seat 960' and the other clamping part 940'. In addition, the first connecting rod mechanism 953' and the second connecting rod mechanism 954' are in transmission connection through the main gear set 955'. Therefore, the main driving part 910' is in transmission connection with the first connecting rod mechanism 953', the main driving part 910' drives the first connecting rod mechanism 953' to move, and the first connecting rod mechanism 953' drives the second connecting rod mechanism 954' to move through the main gear set 955', which then drives the two clamping parts 940' to move close to or away from each other so as to achieve the grabbing or releasing operation of the mechanical hand 90', thereby achieving a simple structure and a lower cost.

Further, since the main driving part 910' is in transmission connection with the first connecting rod mechanism 953' and the first connecting rod mechanism 953' transmits the power to the second connecting rod mechanism 954' through the main gear set 955', the main driving part 910' can be arranged relatively close to the first connecting rod mechanism 953' in a centralized manner, which can further avoid the holding groove 963' and the first imaging apparatus 990', and meet the design requirement of the mechanical hand 90' for a compact structure.

In the above embodiment, as shown in FIGs. 37 and 42, a first rod 951' of the first connecting rod mechanism 953' and a first rod 951' of the second connecting rod mechanism 954' are distributed on a side of the holding groove 963' away from the main driving part 910', and first ends of the first rods 951' are hinged to the base seat 960' through first hinge points 9511'. In addition, the first end of the first rod 951' of the first connecting rod mechanism 953' and the first end of the first rod 951' of the second connecting mechanism 954' are in transmission connection through the main gear set 955', and second ends of the first rods 951' are hinged to the clamping parts 940' through second hinge points 9512'.

Further, a second rod 952' of the first connecting rod mechanism 953' and a second rod 952' of the second connecting rod mechanism 954' are distributed on two outer sides of the holding groove 963', respectively. First ends of the second rods 952' are hinged to the base seat 960' through third hinge points 9521', and second ends of the second rods 952' are hinged to the clamping parts 940' through fourth hinge points 9522'. A figure formed by the first hinge point 9511', the second hinge point 9512', the third hinge point 9521' and the fourth hinge point 9522' is a parallelogram. That is, the first connecting rod mechanism 953' and the second connecting rod mechanism 954' are both parallel four-connecting-rod mechanisms. The parallel four-connecting-rod mechanisms are simple in structure and good in dynamic balance, which can be conductive to improving the stability and reliability of the mechanical hand 90' during working.

The main driving part 910' is in transmission connection with the second rod 952' of the first connecting rod mechanism 953', such that the main driving part 910' can act to drive the second rod 952' of the first connecting rod mechanism 953' to rotate, such that the clamping part 940' connected to the first connecting rod mechanism 953' acts to drive the first rod 951' of the first connecting rod mechanism 953' to rotate. By means of the main gear set 955', the power is transmitted to the second connecting rod mechanism 954' to drive the first rod 951' of the second connecting rod mechanism 954' to rotate and thus drive the other clamping part 940' connected to the second connecting rod mechanism 954' to rotate. Thus, the two clamping parts 940' can move close to or away from each other, achieving a simple structure and convenient operation.

As shown in FIGs. 37 and 42, in some possible embodiments provided by the present application, the mechanical hand 90' further includes a second screw rod 920' and a second guiding nut 930'. The second screw rod 920' is in threaded connection with the second guiding nut 930' and is also connected to the main driving part 910'. The second guiding nut 930' is provided with a cylindrical boss 931'. A sliding slot 9523' is formed in the second rod 952' of the first connecting rod mechanism 953' in a direction from the first end to the second end. The cylindrical boss 931' is located inside the sliding slot 9523' and may move inside the sliding slot 9523' along with movement of the second guiding nut 930'. Therefore, the second guiding nut 930' moves relative to the second screw rod 920' when the main driving part 910' drives the second screw rod 920' to rotate. The second end of the second rod 952' of the first connecting rod mechanism 953' can be driven to rotate relative to the first end thereof through cooperation between the cylindrical boss 931' and the sliding slot 9523'. That is, the second rod 952' can be driven to rotate, such that the clamping part 940' connected to the first connecting rod mechanism 953' can be driven to rotate, so as to drive the second end of the first rod 951' of the first connecting rod mechanism 953' to rotate relative to the first end, i.e., to drive the first rod 951' of the first connecting rod mechanism 953' to rotate. Therefore, the first rod 951' of the first connecting rod mechanism 953' can drive the main gear set 955' to rotate, so as to drive the second connecting rod mechanism 954' to rotate. Hence, the first connecting rod mechanism 953' and the second connecting rod mechanism 954' can be closed or opened in a scissor-like manner, thereby achieving clamping and unloading functions of the clamping parts 940'.

As the second screw rod 920' is elongated and occupies a small space in a radial direction of the second screw rod 920', the main driving part 910' and the first connecting rod mechanism 953' are connected by means of the second screw rod 920' and the second guiding nut 930', such that the second screw rod 920' may be arranged adjacent to the first connecting rod mechanism 953' or adjacent to an edge of the base seat 960' to avoid the holding groove 963' and the first imaging apparatus 990', thereby meeting the design requirement of the mechanical hand 90' for a compact structure.

As shown in FIGs. 37 and 42, in some possible embodiments provided by the present application, the mechanical hand 90' further includes an elastic resetting member 980' connected between the first end of the second rod 952' of the second connecting rod mechanism 954' and the base seat 960', and the elastic resetting member 980' is configured to apply a rotational force to the second connecting rod mechanism 954' in a direction away from the first connecting rod mechanism 953'.

In other words, when the main driving part 910' does not work, the second connecting rod mechanism 954' rotates away from the first connecting rod mechanism 953' under the action of the elastic resetting member 980'. That is, the first connecting rod mechanism 953' and the second connecting rod mechanism 954' are opened in a scissor-like manner, such that the two clamping parts 940' move away from each other. When the main driving part 910' works, the main driving part 910' drives the first connecting rod mechanism 953' to act, such that the first connecting rod mechanism 953' rotates in a direction close to the second connecting rod mechanism 954'. That is, the first connecting rod mechanism 953' and the second connecting rod mechanism 954' are closed in a scissor-like manner. Thus, the two clamping parts 940' approach each other. The arrangement of the elastic resetting member 980' enables the mechanical hand 90' to switch between clamping and unloading actions, and also meets different functions.

Specifically, the elastic resetting member 980' is a torsional spring, and the torsional spring is connected between the base seat 960' and the first end of the second connecting mechanism 954'. As shown in FIG. 37, the torsional spring applies a clockwise rotational force to the second connecting rod mechanism 954' to keep the second connecting rod mechanism 954' away from the first connecting rod mechanism 953'.

As shown in FIGs. 37, 39 and 42, in some possible embodiments provided by the present application, the mechanical hand 90' further includes an auxiliary gear set 912'. The output shaft of the main driving part 910' is in transmission connection with the second screw rod 920' through the auxiliary gear set 912'. The second screw rod 920' is located on a side of the holding groove 963' close to the first connecting rod mechanism 953'.

A transmission direction of the main driving part 910' and the second screw rod 920' can be changed by the auxiliary gear set 912', such that the second screw rod 920' can be arranged to avoid the holding groove 963' and the first imaging apparatus 990'. For example, the second screw rod 920' may be arranged close to an edge of the base seat 960'. Therefore, a space is reserved for providing the holding groove 963', and a space is also reserved for rolling of the first imaging apparatus 990', which can ensure that the first imaging apparatus 990' rolls smoothly between the first extreme position and the second extreme position, to guarantee that the mechanical hand 90' has a larger shooting angle. Meanwhile, the mechanical hand 90' is compact in structure and smaller in dimension.

In other words, for the mechanical hand 90' provided by the embodiments of the present application, the main driving part 910' works to drive the second screw rod 920' to rotate by the auxiliary gear set 912'. Since the second guiding nut 930' on the second screw rod 920' moves relative to the second screw rod 920', through the cooperation between the cylindrical boss 931' on the second guiding nut 930' and the sliding slot 9523' on the first connecting rod mechanism 953', the first connecting rod mechanism 953' can be driven to rotate. The first connecting rod mechanism 953' drives the second connecting rod mechanism 954' to rotate by the main gear set 955', such that the first connecting rod mechanism 953' and the second connecting rod mechanism 954' can be closed or opened in a scissor-like manner, thereby achieving the clamping and unloading functions of the clamping parts 940'. Meanwhile, with this arrangement, a first imaging apparatus and the holding groove 963' can be avoided, making the structure of the mechanical hand 90' compact.

As shown in FIGs. 38 and 40, in some possible embodiments provided by the present application, the base seat 960' includes a first cover plate 961' and a second cover plate 962'. A portion of the first cover plate 961' and a portion of the second cover plate 962' are connected to each other, enclosing and forming a chamber for accommodating the main driving part 910'. A clearance is reserved between the other portions of the first cover plate 961' and the second cover plate 962'. The second guiding nut 930' and the second screw rod 920' are located inside the clearance.

That is, the main driving part 910' is mounted inside the chamber enclosed by the first cover plate 961' and the second cover plate 962', such that the first cover plate 961' and the second cover plate 962' well protect the main driving part 910'. The second guiding nut 930' and the second screw rod 920' are located inside the clearance between the first cover plate 961' and the second cover plate 962'. Therefore, the first cover plate 961' and the second cover plate 962' well protect the second guiding nut 930' and the second screw rod 920', which is conducive to improving the reliability of the mechanical hand 90' and also conductive to improving the aesthetic appeal and neatness of the appearance of the mechanical hand 90'. Moreover, the clearance between the first cover plate 961' and the second cover plate 962' provides sufficient movement space for the second guiding nut 930' and the second screw rod 920'. Specifically, the first connecting rod mechanism 953' and the second connecting rod mechanism 954' may also be partially located inside the clearance between the first cover plate 961' and the second cover plate 962'.

The first cover plate 961' is located above the second cover plate 962', and the first cover plate 961' is provided with the holding groove 963', such that the first imaging apparatus 990' can roll from the top of the base seat 960' to be located inside the receiving groove 963' and roll from the top of the base seat 960' to be located between the two separated clamping parts 940'. Specifically, the first cover plate 961' and the second cover plate 962' may be detachably connected by means of a bolt, clamping and the like, so as to facilitate maintenance of the second guiding nut 930', the second screw rod 920', the first connecting rod mechanism 953' and the second connecting rod mechanism 954' located between the two cover plates, thereby achieving convenient operation.

In some possible embodiments provided by the present application, as shown in FIG. 1, the self-moving cleaning device 002 further includes a second imaging apparatus 050 arranged in front of a device main body 010; a control system 060 configured to identify an obstacle and control a working state of the mechanical arm 001 according to information collected by the first imaging apparatus 990 and the second imaging apparatus 050 so as to grab and unload the obstacle.

The second imaging apparatus 050 may be an original imaging apparatus of the self-moving cleaning device 002. Therefore, with the cooperation between the first imaging apparatus 990 and the second imaging apparatus 050, the obstacle near the self-moving cleaning device 002 and spatial position coordinates of its grabbing point can be identified with reference to an AI algorithm, so as to move or clean up the obstacle.

Further, as shown in FIG. 35, the self-moving cleaning device 002 further includes a processing system 070. The processing system 070 interacts with the control system 060. The control system 060 is electrically connected to the first driving part 110, the second driving part 220, the third driving parts of the two third mechanical joints 30, the fourth driving part 410, the fifth driving part 910 and the sixth driving part 970 of the mechanical arm 001. The processing system 070 acquires information collected by the first imaging apparatus 990 and the second imaging apparatus 050, processes the information with reference to detection results of all rotation angle detecting apparatuses according to a kinematics solving algorithm, and transmits a solving result to the control system 060. The control system 060 issues an instruction to each driving part to drive each driving part to move to a target position, which then enables the mechanical arm 001 to reach a target position to perform a corresponding operation.

It can be understood that only the first driving part 110 is arranged on the base 50, and the second driving part 220, the third driving parts of the two third mechanical joints 30, the fourth driving part 410, the fifth driving part 910 and the sixth driving part 970 are correspondingly distributed on the support arm 60, the connecting arm 70 and the working arm 80 of the mechanical arm 001.

Further, the control system 060 may also view and measure a distance between the clamping part 940 and the obstacle by using a partial field of view of the first imaging apparatus 990, so as to achieve partial logical judgment of the clamping parts 940, thereby improving the accuracy and reliability of the clamping parts 940 in clamping the obstacle.

As shown in FIG. 35, the field of view of the first imaging apparatus 990 may be divided into a secondary field of view C1 and a primary field of view C2. An angle of C1 is smaller than that of C2, for example, a ratio of C1 to C2 is 1:4. It can be understood that the ratio of C1 to C2 may also be other values. The secondary field of view C1 can cover most of the clamping part areas. Thus, the distance between the clamping part 940 and the obstacle may be viewed and measured by using the secondary field of view C1 of the first imaging apparatus 990, and information about the distance between the clamping part 940 and its surroundings may be viewed by using the secondary field of view C1 of the first imaging apparatus 990, which makes it convenient to control the mechanical arm to reasonably move in order to accurately clamp the object.

In some possible embodiments provided by the present application, the control system 060 is also configured to: control the first mechanical joint 10 to unfold the support arm 60 relative to the rotatable base 55 to be perpendicular to the base 50 when the mechanical arm 001 is in a working posture; and control the mechanical arm 001 to act and to be folded for storage inside the holding chamber 011 when the self-moving cleaning device 002 establishes a map or the mechanical arm 001 is in a non-working posture.

That is, the support arm 60 of the mechanical arm 001 is vertically arranged relative to the base 50 when the mechanical arm 001 is working, that is, the support arm 60 is completely erected. This arrangement can reduce the influence of the mechanical arm 001 on a navigation system, thereby improving the operational reliability of the self-moving cleaning device 002.

When the self-moving cleaning device 002 establishes a map, the control system 060 may control the mechanical arm 001 to act and to be folded for storage inside the holding chamber 011, that is, the mechanical arm 001 is accommodated in the holding chamber 011. This arrangement can prevent the mechanical arm 001 from extending out of the holding chamber 011 and affecting operation of a laser sensor, and also can prevent the mechanical arm 001 from extending out of the holding chamber 011 and colliding with the obstacle, thereby improving the reliability of the self-moving cleaning device 002.

When the mechanical arm 001 is in a non-working posture, for example, when it is unnecessary to grab the obstacle using the mechanical arm 001, the control system 060 may control the mechanical arm 001 to act and to be folded for storage inside the holding chamber 011, that is, the mechanical arm 001 is accommodated inside the holding chamber 011. This arrangement can prevent the mechanical arm 001 from extending out of the holding chamber 011 and affecting the self-moving cleaning device 002 in performing cleaning, charging and other operations, and ensure that other operations of the self-moving cleaning device 002 can be carried out reliably. It can be understood that the obstacle described above may also be an object required by the user, such as a remote controller and an apple, which may not be listed one by one here.

It should be understood that the above specific embodiments of the present application are only for exemplary illustration or explanation of the principles of the present application, and do not constitute a limitation to the present application. Therefore, any modifications, equivalent substitutions, improvements, etc. made without departing from the spirit and scope of the present application should be included in the scope of protection of the present application. Furthermore, the appended claims of the present application are intended to cover all variations and modifications that fall within the scope and boundary of the appended claims, or equivalent forms of such a scope and boundary.

In the present application, the terms "first", "second" and "third" are used for a descriptive purpose only and shall not be construed as indicating or implying relative importance; and the term "a plurality of' refers to two or more, unless otherwise specified. The terms "mount", "connected with", "connected to", "fixed" and the like should be comprehended in a broad sense. For example, the term "connection to" may refer to a fixed connection, detachable connection or integrated connection; and the term "connected with" may refer to a direct connection or an indirect connection via an intermediary. Those of ordinary skills in the art can understand the specific meanings of the above terms in the present application according to the specific circumstances.

In the descriptions of the present application, it should be understood that orientation or positional relationships indicated by the terms "upper", "lower", "left", "right", "front", "rear", etc. are orientation or positional relationships shown on the basis of the drawings, only for the purposes of the ease in describing the present application and simplification of its descriptions, but not indicating or implying that the specified device or unit has to be specifically located, and structured and operated in a specific direction, and therefore, should not be understood as limitations to the present application.

In the descriptions of the description, the terms "one embodiment", "some embodiments" and "specific embodiments" are described to mean that the specific features, structures, materials or characteristics described in combination with the present embodiment or example are included in at least one embodiment or example of the present application. In the present description, schematic description of the above terms does not necessarily refer to the same embodiment or example. Furthermore, the described specific features, structures, materials or characteristics can be combined in any one or more embodiments or examples in a proper manner.

Described above are only the preferred embodiments of the present application, but not intended to limit the present application. Various changes and modifications may be made to the present application for those skilled in the art. Any modifications, equivalent substitutions, improvements, etc., made within the spirit and principles of the present application should be included within the scope of protection of the present application.

## Claims

1. A self-moving cleaning device (002), comprising:
a device main body (010) and a mechanical arm (001), wherein the device main body (010) comprises a holding chamber (011), two driving wheels (020) and a driven wheel (030) are distributed at a bottom of the device main body (010) in the form of a triangle, and the mechanical arm (001) is foldably held in the holding chamber (011); and
the mechanical arm (001) comprises a rotatable base (55), and a projection of the rotatable base (55) in a horizontal plane is located inside a projection of the triangle in the horizontal plane.

2. The self-moving cleaning device (002) according to claim 1, wherein
the two driving wheels (020) are distributed along a transverse direction of the device main body (010), and the mechanical arm (001) is arranged close to the two driving wheels (020).

3. The self-moving cleaning device (002) according to claim 1, wherein
when the mechanical arm (001) is foldably held in the holding chamber (011), an end of the mechanical arm (001) away from the driving wheels (020) and/or the driven wheel (030) is not higher than an upper surface of the device main body (010).

4. The self-moving cleaning device (002) according to claim 1, wherein the mechanical arm (001) further comprises:
a base (50), a support arm (60), a connecting arm (70), a working arm (80) and a mechanical hand (90/90'), wherein the base (50) is connected within the holding chamber (011); the rotatable base (55) is connected to the base (50) through a first mechanical joint (10), such that the rotatable base (55) is able to rotate relative to the base (50); the support arm (60) is connected to the rotatable base (55) through a second mechanical joint (20), such that the support arm (60) is able to be folded or unfolded relative to the rotatable base (55); a first end of the connecting arm (70) is connected to the support arm (60) through one third mechanical joint (30), such that the connecting arm (70) is able to be folded or unfolded relative to the support arm (60); a second end of the connecting arm (70) is connected to the working arm (80) through the other third mechanical joint (30), such that the working arm (80) is able to be folded or unfolded relative to the connecting arm (70); and the working arm (80) is connected to the mechanical hand (90/90') through a fourth mechanical joint (40), such that the mechanical hand (90/90') is able to rotate relative to the working arm (80).

5. The self-moving cleaning device (002) according to claim 4, wherein
bent structures are arranged at two ends of the connecting arm (70), respectively; and the two bent structures are engaged in a convex-concave shape fit with the support arm (60) and the working arm (80) respectively when the connecting arm (70) is in a folded state relative to both the support arm (60) and the working arm (80).

6. The self-moving cleaning device (002) according to claim 4, wherein the first mechanical joint (10) comprises:
a first driving part (110), a rotatable joint (120) and a first transmission assembly (130), wherein the first transmission assembly (130) is configured for transmission connection of the first driving part (110) and the rotatable joint (120), and the first driving part (110) is configured to drive the rotatable joint (120) to rotate through the first transmission assembly (130), such that the rotatable base (55) rotates relative to the base (50).

7. The self-moving cleaning device (002) according to claim 4, wherein the second mechanical joint (20) comprises:
a second driving part (220), a first screw rod (230) and a first guiding nut (210), wherein the first guiding nut (210) is in threaded connection with the first screw rod (230) and is hinged to the rotatable base (55), the second driving part (220) is arranged on the support arm (60), a first end of the first screw rod (230) is connected to the second driving part (220), and a second end of the first screw rod (230) passes through the first guiding nut (210) and is arranged to face the rotatable base (55); and
the second driving part (220) is configured to drive the first screw rod (230) to rotate, such that the first screw rod (230) and the first guiding nut (210) move relatively to drive the support arm (60) to be raised or lowered relative to the rotatable base (55).

8. The self-moving cleaning device (002) according to claim 4, wherein the third mechanical joint (30) comprises:
a third driving part connected to a first arm, the third driving part comprising a motor (310) and a planetary speed-reducing mechanism (320), the motor (310) comprising a first output shaft (311), an input end of the planetary speed-reducing mechanism (320) being connected to the first output shaft (311), and an output end of the planetary speed-reducing mechanism (320) being connected to a second arm to drive the second arm to rotate relative to the first arm; and
the first arm is the connecting arm (70), both ends of the connecting arm (70) are connected to the output end of the planetary speed-reducing mechanism (320), and the second arm is the support arm (60) or the working arm (80).

9. The self-moving cleaning device (002) according to claim 8, wherein
the motor (310) further comprises a motor base plate (312), a stator (313) and a rotor (314), the rotor (314) being located outside the stator (313), the first output shaft (311) penetrating through the motor base plate (312), and the stator (313) being connected to the motor base plate (312) and located on a circumferential side of the first output shaft (311); and
the planetary speed-reducing mechanism (320) comprises a primary gear set (321), the primary gear set (321) being connected to the first output shaft (311) and arranged adjacent to the motor base plate (312).

10. The self-moving cleaning device (002) according to claim 4, wherein
the fourth mechanical joint (40) comprises a fourth driving part (410), a photoelectric sensor (420) and a baffle (430), the fourth driving part (410) being arranged on the working arm (80) and connected to the mechanical hand (90/90') to drive the mechanical hand (90/90') to rotate; one of the photoelectric sensor (420) and the baffle (430) being arranged on the mechanical hand (90/90'), and the other being arranged on the working arm (80); and the baffle (430) being configured to change a sensing result of the photoelectric sensor (420) when the mechanical hand (90/90') is at a zero position.

11. The self-moving cleaning device (002) according to claim 4, wherein the mechanical arm (90) further comprises:
a base seat (960), a fifth driving part (910), a second screw rod (920), a second guiding nut (930), two clamping parts (940) and two connecting rod mechanisms (950), wherein
the base seat (960) is connected to the fourth mechanical joint (40), the fifth driving part (910) is connected to the base seat (960), the second screw rod (920) is in threaded connection with the second guiding nut (930) and is connected to the fifth driving part (910), the second guiding nut (930) is provided with a cylindrical boss (931), a first end of each of the connecting rod mechanisms (950) is movably connected to the cylindrical boss (931), and a second end of each of the connecting rod mechanisms (950) is hinged to the corresponding clamping part (940); and
the fifth driving part (910) drives the second screw rod (920) to rotate, such that the second guiding nut (930) moves relative to the second screw rod (920) to drive the two connecting rod mechanisms (950) to rotate, thereby driving the two clamping parts (940) to move close to or away from each other.

12. The self-moving cleaning device (002) according to claim 11, wherein the mechanical arm (90) further comprises:
a sixth driving part (970), a transmission mechanism (980) and a first imaging apparatus (990), wherein the sixth driving part (970) is configured to drive the transmission mechanism (980) so as to drive the first imaging apparatus (990) to rotate relative to the base seat (960).

13. The self-moving cleaning device (002) according to claim 4, wherein the mechanical arm (90') further comprises:
a base seat (960'), the base seat (960') being provided with a holding groove (963') with an upward opening;
a main driving part (910') and two clamping parts (940'), which are arranged on the base seat (960') and located outside the holding groove (963'), the main driving part (910') being in transmission connection with the two clamping parts (940') to drive the two clamping parts (940') to move close to or away from each other; and
an auxiliary driving part (970') and a first imaging apparatus (990'), the auxiliary driving part (970') being arranged inside the holding groove (963'), and the auxiliary driving part (970') being in transmission connection with the first imaging apparatus (990') to drive the first imaging apparatus (990') to roll to be accommodated inside the holding groove (963') or to be located outside the holding groove (963').

14. The self-moving cleaning device (002) according to claim 13, wherein
the first imaging apparatus (990') comprises a camera (992');
the first imaging apparatus (990') comprises a first extreme position contained inside the holding groove (963'), and at the first extreme position, a top of the first imaging apparatus (990') is lower than an upper surface of the base seat (960'), and the camera (992') faces upward; and
the first imaging apparatus (990') comprises a second extreme position between the two clamping parts (940') moving away from each other, and the camera (992') of the first imaging apparatus (990') faces downward at the second extreme position.

15. The self-moving cleaning device (002) according to any one of claims 12 to 14, further comprising:
a second imaging apparatus (050) arranged at a front of the device main body (010); and
a control system, configured to identify an obstacle based on information collected from the first imaging apparatus (990) and the second imaging apparatus (050), and control a working state of the mechanical arm (001) to grasp and unload the obstacle.

16. The self-moving cleaning device (002) according to claim 15, wherein the control system (060) is further configured to:
when the mechanical arm (001) is in a working posture, control the first mechanical joint (10) to enable the support arm (60) to be unfolded relative to the rotatable base (55) to be perpendicular to the base (50); and
when the self-moving cleaning device (002) constructs a map or the mechanical arm (001) is in a non-working posture, control the mechanical arm (001) to act and be folded for storage inside the holding chamber (011).
